(19) Europäisches Patentamt
European Patent Office
Office européen des brevets

(11) EP 2 865 720 B1

(12) **EUROPEAN PATENT SPECIFICATION**

(45) Date of publication and mention of the grant of the patent:
**03.05.2017 Bulletin 2017/18**

(21) Application number: **14188418.9**

(22) Date of filing: **10.10.2014**

(51) Int Cl.:
***C09D 1/00*** *(2006.01)* ***C09D 4/00*** *(2006.01)*
***C09D 4/06*** *(2006.01)* ***C09D 7/12*** *(2006.01)*
*C08K 5/54* *(2006.01)*

(54) **Photocurable coating composition, laminate, and automotive headlamp covering sheet**

Lichthärtbare Beschichtungszusammensetzung, Laminat und Fahrzeugscheinwerferdeckfolie

Composition de revêtement photodurcissable, stratifié, et feuille de recouvrement de phare avant pour automobile

(84) Designated Contracting States:
**DE FR GB**

(30) Priority: **24.10.2013 JP 2013220815**
**16.04.2014 JP 2014084090**

(43) Date of publication of application:
**29.04.2015 Bulletin 2015/18**

(73) Proprietor: **Shin-Etsu Chemical Co., Ltd.**
**Chiyoda-ku**
**Tokyo (JP)**

(72) Inventors:
- **Masuda, Kohei**
  **Annaka-shi, Gunma (JP)**
- **Higuchi, Koichi**
  **Annaka-shi, Gunma (JP)**
- **Yoshikawa, Yuji**
  **Annaka-shi, Gunma (JP)**

(74) Representative: **Stoner, Gerard Patrick**
**Mewburn Ellis LLP**
**City Tower**
**40 Basinghall Street**
**London EC2V 5DE (GB)**

(56) References cited:
**EP-A1- 2 428 491** **DE-A1-102009 035 797**
**JP-A- 2005 272 755**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 865 720 B1

## Description

### TECHNICAL FIELD

This invention relates to photocurable coating compositions. More particularly, it relates to photocurable coating compositions comprising titanium oxide, for forming transparent coatings having good long-term UV-shielding capability, methods of making and using the compositions, laminates having such coatings, and automotive headlamp covering sheets.

### BACKGROUND

Photocurable coating compositions can improve productivity by virtue of their simple cure process. In the field of photocurable coating compositions, it is desired to impart weather resistance thereto while maintaining their productivity. For imparting weather resistance, it is proposed to add UV absorbers to the existing photocurable coating compositions. Weathering performance is still insufficient.

US-A-5,990,188 discloses the addition of organic UV absorbers to radiation curable coating compositions. However, many organic UV absorbers lack weathering stability and are thus difficult to impart long-term UV shielding capability.

It is believed that the above problem may be overcome by using inorganic UV absorbers (e.g. titanium oxide, zinc oxide or cerium oxide) instead of the organic UV absorbers. JP 5148846 discloses a photocurable coating composition containing inorganic fine particles having a specific surface electric charge. In this approach, it is believed effective to control the surface electric charge to a specified range so that fine particles may be segregated. When it is intended to impart UV-shielding capability, fine particles should preferably be uniformly dispersed rather than segregated. However, with the approach of JP 5148846 it is difficult to uniformly disperse fine particles and to maintain transparency.

In the prior art, a photocurable coating composition having long-term UV-shielding capability and transparency is not available.

EP-A-2428491 describes a dispersion liquid of fine particles of core-shell type inorganic oxides fine core particles e.g. of titanium oxide which carry an intermediate layer of a hydrate or oxide of at least one of Zr, Sn, Nb, Ba, La, Sr, Ce and Li, and a shell layer with a composite oxide of silicon and at least one of A1, Zr and Sb. They can be used in photocurable coating compositions.

JP-A-2004/091323 describes coating compositions for reflection-preventing films, containing metal oxide fine particles having 10 to 200 mm mean particle diameter, with a nonionic organic dispersing agent, a binder and organic solvent.

DE 102009035797 (US2012/125234A) describes antireflection coatings made from coating compositions consisting essentially of nanoparticles and solvent, applied with a thermal treatment. These nanoparticles may be a mixture of silica and titanium oxide. They may be stabilized by carboxylic acid; the composition is substantially free of polymers.

### THE INVENTION

The aim herein is to provide useful photocurable coating compositions loaded with titanium oxide microparticles and having transparency and long-term UV-shielding capability, methods of making and using them, laminates comprising coatings of the compositions, and an automotive headlamp covering sheet.

The inventors have found that problems associated with titanium oxide-loaded photocurable transparent coating compositions are reduced or overcome by furnishing core/shell type microparticles each consisting of a titanium oxide core and a silicon oxide shell, treating the core/shell type microparticles with two surface treating components having the general formulae (I) and (II) defined below, and combining the surface-treated titanium oxide with a photo-polymerizable monomer or oligomer and a photoinitiator to formulate a photocurable coating composition.

In one aspect, the invention provides a photocurable coating composition comprising

(1) surface-treated titanium oxide comprising 100 parts by weight of core/shell type microparticles each consisting of a core of titanium oxide which may be complexed with another inorganic oxide, and a shell of silicon oxide around the core, obtainable by treatment with 11 to 200 parts by weight of both of two surface treating components having the general formulae (I) and (II):

$$R^1Si(OR^2)_3 \qquad (I)$$

wherein $R^1$ is a $C_1$-$C_{15}$ organic group which may have a (meth)acrylic moiety, and $R^2$ is $C_1$-$C_4$ alkyl,

$(R^3R^4{}_2Si)_2NH$ (II)

wherein $R^3$ is a $C_1$-$C_{15}$ organic group which may have a (meth)acrylic moiety, and $R^4$ is $C_1$-$C_6$ alkyl,
(2) a photopolymerizable monomer and/or oligomer, and
(3) a photoinitiator.

Preferably the surface-treated titanium oxide is prepared or obtainable by a method comprising the steps of: (A) furnishing a water dispersion of core/shell type microparticles, (B) adding an alcohol which is not fully compatible with water and forms a two-phase system, (C) adding a silane compound having the general formula (I) and/or a (partial) hydrolytic condensate thereof, (D) irradiating microwave, (E) adding an organic solvent, (F) azeotroping off water, (G) optionally removing water to 1,000 ppm or less, and (H) reacting with a silane compound having the general formula (II).
In this case, the weight ratio of the surface treating component of formula (I) and the surface treating component of formula (II) is preferably 10:190 to 199:1.
Preferably the water dispersion of core/shell type microparticles in step (A) is a water dispersion of core/shell type tetragonal titanium oxide solid-solution microparticles each consisting of a core of tetragonal titanium oxide having tin and manganese incorporated in solid solution and a shell of silicon oxide around the core. The cores have a volume average 50% cumulative distribution diameter of up to 30 nm, and the core/shell type microparticles have a volume average 50% cumulative distribution diameter of up to 50 nm, both as measured by the dynamic light scattering method. The amount of tin incorporated in solid solution is to provide a molar ratio of titanium to tin (Ti/Sn) of 10/1 to 1,000/1, and the amount of manganese incorporated in solid solution is to provide a molar ratio of titanium to manganese (Ti/Mn) of 10/1 to 1,000/1.
Preferably the surface treating component having formula (I) is 3-acryloyloxypropyltrimethoxysilane or 3-methacryloyloxypropyltrimethoxysilane.
Preferably the coating composition is such that, when applied on a quartz substrate to form a coating 5 μm thick, the coating has a haze of up to 2.
Preferably the coating composition is such that, when applied on a quartz substrate to form a coating 5 μm thick, the coating has a light transmittance of at least 80% at a wavelength of 500 nm.
Preferably the coating composition is such that, when applied on a quartz substrate to form a coating 5 μm thick, the coating has a light transmittance of up to 10% at a wavelength of 300 nm.
In another aspect, the invention provides a method of making a coating composition comprising the preparation of the surface-treated titanium oxide by a surface treatment as disclosed herein.
In another aspect the invention provides a method of making a laminate comprising applying any coating composition as defined above on at least one surface of a substrate and curing to a cured coating.
In another aspect, the invention provides a laminate comprising a substrate and a cured coating of any coating composition as defined above or below on at least one surface of the substrate.
The substrate is typically polycarbonate.
Preferably the coating has a Taber abrasion index of up to 10 in the Taber abrasion test according to ASTM D1044.
Preferably the coating has a yellowness index difference of up to 10 before and after exposure to UV radiation in a dose of 300 $MJ/m^2$.
Preferably the coating has a haze difference of less than 10 before and after exposure to UV radiation in a dose of 300 $MJ/m^2$.
Also contemplated herein are a sheet suitable for covering an automotive headlamp, comprising the laminate defined above, the use of such a laminate for that purpose, and the corresponding covered headlamp.

## ADVANTAGEOUS EFFECTS

We find that photocurable coating compositions as disclosed herein form coatings having transparency and mar resistance, though loaded with titanium oxide. Depending on the properties of the specific titanium oxide, a coating having improved UV-shielding performance can be formed. Coated articles using the coating composition are found to inhibit UV-induced degradation of the substrate, be resistant to damaging or marring, and maintain aesthetically acceptable appearance for a long term.

## BRIEF DESCRIPTION OF THE DRAWINGS

FIG. 1 is a chart showing a volume average 50% cumulative distribution diameter of organotitania sol obtained in

step (F) of Synthesis Example 1, as analyzed by the dynamic light scattering method.
FIG. 2 is a TEM photomicrograph (magnification ×300,000) of the organotitania sol.
FIG. 3 is a chart showing $^{29}Si$ NMR spectrum of surface-treated titanium oxide in Synthesis Example 1.
FIG. 4 is a chart showing $^{29}Si$ NMR spectrum of surface-treated titanium oxide in Synthesis Example 2.
FIG. 5 is a chart showing $^{29}Si$ NMR spectrum of surface-treated titanium oxide in Comparative Synthesis Example 1.
FIG. 6 is a chart of UV-visible transmittance spectra of the laminates of Example 8 and Comparative Example 5 before and after UV exposure in a weatherability test.

FURTHER EXPLANATIONS; OPTIONS AND PREFERENCES

The terms "a" and "an" herein do not denote a limitation of quantity, but rather denote the presence of at least one of the referenced item. As used herein, the notation ($C_n$-$C_m$) means a group containing from n to m carbon atoms per group.

The terminology "(meth)acrylic" refers collectively to acrylic and methacrylic. "UV" is the abbreviation of ultraviolet radiation.

For the avoidance of doubt it is confirmed that in the general description herein, in the usual way the proposal of general preferences and options in respect of different features of the composition, methods, laminate and sheet constitutes the proposal of general combinations of those general preferences and options for the different features, insofar as they are combinable and compatible and are put forward in the same context.

In respect of numerical ranges disclosed in the present description it will of course be understood that in the normal way the technical criterion for the upper limit is different from the technical criterion for the lower limit, i.e. the upper and lower limits are intrinsically distinct proposals.

Components of the photocurable coating composition of the invention are now described in detail.

(1) Surface-treated titanium oxide

Component (1) is surface-treated titanium oxide which is obtained by furnishing core/shell type microparticles each consisting of a core of titanium oxide which may be complexed with another inorganic oxide, especially metal oxide (other than titanium oxide) and a shell of silicon oxide enclosing the core, and treating 100 parts by weight of the core/shell type microparticles with 11 to 200 parts by weight (in total) of two kinds of surface treating components having the general formulae (I) and (II).

$$R^1Si(OR^2)_3 \qquad (I)$$

Herein $R^1$ is a $C_1$-$C_{15}$ organic group which may have a (meth)acrylic moiety, and $R^2$ is a $C_1$-$C_4$ alkyl group.

$$(R^3R^4{}_2Si)_2NH \qquad (II)$$

Herein $R^3$ is a $C_1$-$C_{15}$ organic group which may have a (meth)acrylic moiety, and $R^4$ is a $C_1$-$C_6$ alkyl group.

In formula (I), $R^1$ is a $C_1$-$C_{15}$ organic group which may have a (meth)acrylic moiety, typically an alkyl group of 1 to 15 carbon atoms, preferably 4 to 12 carbon atoms, optionally having (meth)acryloyloxy moiety. Exemplary of the compound having formula (I) are silane compounds having a carbon group which may be substituted with (meth)acryloyloxy moiety, including methyltrimethoxysilane, methyltriethoxysilane, ethyltrimethoxysilane, ethyltriethoxysilane, propyltrimethoxysilane, propyltriethoxysilane, (meth)acryloyloxymethyltrimethoxysilane, (meth)acryloyloxymethyltriethoxysilane, (meth)acryloyloxyethyltrimethoxysilane, (meth)acryloyloxyethyltriethoxysilane, (meth)acryloyloxypropyltrimethoxysilane, (meth)acryloyloxypropyltriethoxysilane, (meth)acryloyloxyoctyltrimethoxysilane, and (meth)acryloyloxyoctyltriethoxysilane. These compounds may be synthesized or commercially available. Commercial products include methyltrimethoxysilane "KBM-13", propyltrimethoxysilane "KBM-3033", acryloyloxypropyltrimethoxysilane "KBM-5103", and methacryloyloxypropyltrimethoxysilane "KBM-503", all available from Shin-Etsu Chemical Co., Ltd.

In formula (II), $R^3$ is a $C_1$-$C_{15}$ organic group which may have a (meth)acrylic moiety, typically an alkyl group of 1 to 15 carbon atoms, preferably 4 to 12 carbon atoms, optionally having (meth)acryloyloxy moiety. Exemplary of the compound having formula (II) are hexamethyldisilazane, bis[(acryloyloxymethyl)dimethylsilyl]azane, bis[(acryloyloxypropyl)dimethylsilyl]azane, hexaethyldisilazane, and hexapropyldisilazane. These compounds may be synthesized by the well-known method (JP-A 2009-67778). One or both of compounds (I) and (II) may have a said (meth)acrylic moiety.

The total treating amount of the two surface treating components of formulae (I) and (II) is 11 to 200 parts, preferably 40 to 190 parts, more preferably 60 to 180 parts by weight per 100 parts by weight of the core/shell type microparticles.

In this case, the weight ratio of the surface treating component of formula (I) and the surface treating component

of formula (II) is preferably 10:190 to 199:1, more preferably 20:170 to 170:20, most preferably 30:150 to 150:30.

The method for preparing surface-treated titanium oxide is not particularly limited. For example, titanium oxide particles obtained by starting with a commercially available dispersion of titanium oxide in organic solvent (for example, titania sol "Optolake" series from JGC C&C) and surface treating it with silane compounds having formulae (I) and (II) may be used. Preferably, the surface-treated titanium oxide is prepared by a method comprising the steps of: (A) furnishing a water dispersion of core/shell type microparticles, (B) adding an alcohol which is not fully compatible with water and forms a two-phase system, (C) adding a silane compound having the general formula (I) and/or a (partial) hydrolytic condensate thereof, (D) heating such as by applying microwaves, (E) adding an organic solvent, (F) removing water, e.g. by azeotroping off, (G) optionally removing further water to 1,000 ppm or less, and (H) reacting with a silane compound having the general formula (II).

Step A

Step (A) is to furnish a titanium oxide dispersion, preferably a water dispersion of inorganic oxide colloid. The inorganic oxide colloid water dispersion is desirably a dispersion wherein inorganic oxide particles having an average cumulative particle size of 1 to 200 nm are dispersed in a dispersing medium, typically water, without agglomeration.

Dispersed phase of colloidal solution

The dispersed phase of colloidal solution is titanium oxide which may be complexed with another inorganic oxide, especially metal oxide (sometimes referred to simply as "titanium oxide," hereinafter). The metal (exclusive of titanium) of the metal oxide which may be complexed with titanium oxide is selected from among Group 13 elements, Group 14 elements (exclusive of carbon), first transition series elements, second transition series elements, third transition series elements, and lanthanoids. Inter alia, tin and manganese are preferred.

The metal oxide which can be complexed with titanium oxide may be one or more metal oxides whose metal is selected from the foregoing group, or a complex of such metal oxides. As used herein, the term "complexed" is used in a broad sense and refers to a composite or complex oxide formed through simple mixing or chemical bonding. The complex oxide formed through chemical bonding refers to the form represented by the following formula (X).

$$(M^1O_x)_m(M^2O_y)_n \qquad (X)$$

Herein $M^1$ is an element selected from among A1, B, In, Si, Ge, Sn, Ti, Mn, Zn, Y, Zr, Hf, Ta, La, Ce, Pr, Nd, Tb, Dy, and Yb. $M^2$ is an element selected from among A1, B, In, Si, Ge, Sn, Ti, Mn, Zn, Y, Zr, Hf, Ta, La, Ce, Pr, Nd, Tb, Dy, and Yb, provided that the element of $M^2$ is not identical with the element of $M^1$. Letters x and y are given as $x = a/2$ wherein a is the valence number of $M^1$, and $y = b/2$ wherein b is the valence number of $M^2$. Letters m and n are real numbers meeting $m+n = 1$, $0 < m < 1$ and $0 < n < 1$. That is, the structure has a unit in which $M^1$ bonds with $M^2$ via oxygen. In the structure, $M^1$ and $M^2$ may be sparsely or locally distributed. The structure wherein $M^1$ and $M^2$ are sparsely distributed is as observed in a co-hydrolysate of two or more metal alkoxides. The structure wherein $M^1$ and $M^2$ are locally distributed is as observed in core/shell type particles (i.e. particles each consisting of a core of microparticulate metal oxide and a shell of another metal oxide enclosing the core) and is formed, for example, by hydrolysing a plurality of metal alkoxides in stages depending on the type of metal alkoxide. Inter alia, tin and manganese are preferred.

The particle size (specifically, average cumulative particle diameter) of titanium oxide microparticles as dispersed phase may be measured by a variety of methods. The range of particle size is described herein as a volume basis 50% cumulative distribution diameter ($D_{50}$) as measured by the dynamic light scattering method using laser light while the particle size may be observed as supporting evidence under electron microscope. Although the value determined by such a measurement method does not depend on a particular measuring instrument, such an instrument as Nanotrac® UPA-EX150 (Nikkiso Co., Ltd.) may be used for the dynamic light scattering method. For the electron microscopy, a transmission electron microscope H-9500 (Hitachi High-Technologies Corp.) may be used. When the colloidal solution is added to a coating composition, for example, the average cumulative particle diameter of dispersed phase should preferably in a range of 1 to 200 nm, more preferably 1 to 100 nm, even more preferably 1 to 80 nm, and most preferably 1 to 50 nm, because transparency in the visible region is crucial. If the average cumulative particle diameter of dispersed phase exceeds 200 nm, it is larger than the wavelength of the visible region, often leading to noticeable scattering. If the particle diameter is less than 1 nm, the total surface area of dispersed phase may become very large in the system, and so the titanium oxide dispersion become difficult to handle.

Dispersing medium of titanium oxide dispersion

The colloid solution furnished in step (A) is characterized by water as dispersing medium. The water used

herein may be fresh water available as city water, industrial water, well water, natural water, rain water, distilled water, and deionized water, with deionized water being preferred. Deionized water may be prepared through a desalinator (e.g. FW-10 by Organo Corp. or Direct-QUV3 by Merck Millipore). The dispersing medium may contain a monohydric alcohol which is miscible with water in any ratio, when it is added in the step of preparing titanium oxide dispersion as will be described later. The water-miscible monohydric alcohol may also be contained as resulting from the co-solvent during preparation of core/shell type microparticles and the by-product on hydrolysis of metal alkoxide in the sol-gel reaction. The water-miscible monohydric alcohol may be contained in an amount of preferably 0 to 30% by weight, more preferably 0 to 25% by weight, and even more preferably 0 to 20% by weight, based on water. If the amount of the water-miscible monohydric alcohol exceeds 30 wt%, the results may become unfavorable because it can serve as a compatibilizing agent for the alcohol which is not fully compatible with water and to be added in step (B).

Concentration of titanium oxide dispersion

The titanium oxide dispersion in step (A) should preferably have a concentration of 1 to 35% by weight, more preferably 5 to 30% by weight, and even more preferably 10 to 25% by weight. If the concentration of the titanium oxide dispersion is less than 1 wt%, preparation efficiency may become low. If the concentration exceeds 35 wt%, the dispersion may tend to gel, depending on such conditions as pH and temperature. As used herein, the concentration is a percentage of the weight of dispersed phase divided by the weight of the overall titanium oxide dispersion (total of dispersed phase and dispersing medium). The concentration may be computed from a weight change which is determined by weighing a certain amount of the titanium oxide dispersion and evaporating the dispersing medium to dryness.

Dispersion of core/shell structure titanium oxide

The titanium oxide dispersion used herein is preferably a dispersion of titanium oxide microparticles of core/shell structure each consisting of a core of titanium oxide which may be complexed with one or more other metal oxides (described above) and a shell of one or more other metal oxides (described above) enclosing the core. The dispersion of core/shell type titanium oxide microparticles is typically a dispersion of core/shell type titanium oxide microparticles each consisting of a core of complex oxide, specifically titanium oxide-tin oxide-manganese oxide (i.e. titanium oxide microparticle having tin and manganese incorporated in solid solution) and a shell of silicon oxide enclosing the core. Hereinafter, reference is made to a dispersion of core/shell type titanium oxide microparticles (or core/shell type tetragonal titanium oxide solid solution).

Colloidal dispersion of core/shell type tetragonal titanium oxide solid solution microparticles

The colloidal dispersion of core/shell type tetragonal titanium oxide solid solution is a dispersion of microparticles each consisting of a core of tetragonal titanium oxide having tin and manganese incorporated in solid solution and a shell of silicon oxide enclosing the core, dispersed in an aqueous dispersing medium, typically water.

Titanium oxide (or titania) generally includes three types, rutile, anatase and brookite types. Herein titanium oxide of tetragonal rutile type is preferably used as solvent for tin and manganese because it has a low photocatalytic activity and high UV-shielding capability.

Tin and manganese form a solid solution with titanium oxide. The tin component as one solute is not particularly limited as long as it is derived from a tin salt. Included are tin oxide and tin chalcogenides such as tin sulfide, with tin oxide being preferred. Exemplary tin salts include tin halides such as tin fluoride, tin chloride, tin bromide and tin iodide, tin halogenoids such as tin cyanide and tin isothiocyanide, and tin mineral acid salts such as tin nitrate, tin sulfate and tin phosphate. Of these, tin chloride is preferred for stability and availability. Tin in the tin salt may have a valence of 2 to 4, with tetravalent tin being preferred.

The manganese component as another solute is not particularly limited as long as it is derived from a manganese salt. Included are manganese oxide and manganese chalcogenides such as manganese sulfide, with manganese oxide being preferred. Exemplary manganese salts include manganese halides such as manganese fluoride, manganese chloride, manganese bromide and manganese iodide, manganese halogenoids such as manganese cyanide and manganese isothiocyanide, and manganese mineral acid salts such as manganese nitrate, manganese sulfate and manganese phosphate. Of these, manganese chloride is preferred for stability and availability. Manganese in the manganese salt may have a valence of 2 to 7, with divalent manganese being preferred.

When tin and manganese form a solid solution with tetragonal titanium oxide, the amount of tin incorporated in solid solution is to provide a molar ratio of titanium to tin (Ti/Sn) of 10/1 to 1,000/1, preferably 20/1 to 200/1, and the amount of manganese incorporated in solid solution is to provide a molar ratio of titanium to manganese (Ti/Mn) of 10/1 to 1,000/1, preferably 20/1 to 200/1. If the amount of tin or manganese in solid solution form is to provide a Ti/Sn or Ti/Mn molar ratio of less than 10, there is observed considerable light absorption in the visible region assigned to tin

and manganese. If the Ti/Sn or Ti/Mn molar ratio exceeds 1,000, photocatalytic activity is not fully deprived, and undesirably, the crystal system transitions to anatase type having low visible absorptivity.

The solid solution form of tin and manganese components may be either substitutional or interstitial. The substitutional solid solution refers to a solid solution form in which tin and manganese substitute at the site of titanium(IV) ion in titanium oxide. The interstitial solid solution refers to a solid solution form in which tin and manganese fit in the space between crystal lattices of titanium oxide. The interstitial type tends to create F-center which causes coloring, and due to poor symmetry around a metal ion, the Franck-Condon factor of electro-vibronic transition at the metal ion increases, leading to more absorption of visible light. For this reason, the substitution type is preferred.

A shell of silicon oxide is formed around the nanosized core of tetragonal titanium oxide having tin and manganese incorporated in solid solution. The following descriptions of methods, materials and parameters can also be applied with other types of titanium oxide cores herein. The shell may contain silicon oxide as the major component and another component(s) such as tin, aluminum and the like while it may be formed by any desired techniques. For example, the silicon oxide shell may be formed by hydrolytic condensation of a tetraalkoxysilane. Suitable tetraalkoxysilanes include commonly available ones such as tetramethoxysilane, tetraethoxysilane, tetra(n-propoxy)silane, tetra(isopropoxy)silane, and tetra(n-butoxy)silane. Of these, tetraethoxysilane is preferred from the standpoints of reactivity and safety. For example, useful tetraethoxysilane is commercially available under the tradename: KBE-04 from Shin-Etsu Chemical Co., Ltd. Hydrolytic condensation of a tetraalkoxysilane may be performed in water, optionally in the presence of a condensation catalyst such as ammonia, aluminum salts, organoaluminum compounds, tin salts, or organotin compounds. Inter alia, ammonia is especially preferred because it also serves as a dispersant for the nanosized cores.

Shells of silicon oxide are formed around nanosized cores of tetragonal titanium oxide having tin and manganese incorporated in solid solution, yielding core/shell type tetragonal titanium oxide solid-solution particles. The silicon oxide shells preferably account for 20 to 50%, more preferably 25 to 45%, and even more preferably 30 to 40% by weight based on the overall core/shell type tetragonal titanium oxide particles. If the shell amount is less than 20 wt%, then shell formation may be insufficient. If the shell amount exceeds 50 wt%, then the resulting particles tend to agglomerate together, rendering the dispersion opaque.

In the dispersion of core/shell type tetragonal titanium oxide solid-solution particles, the nanosized cores of tetragonal titanium oxide having tin and manganese incorporated in solid solution should preferably have a volume basis 50% cumulative distribution diameter $D_{50}$ of up to 30 nm, more preferably up to 20 nm, and the core/shell type tetragonal titanium oxide particles should preferably have a volume basis 50% cumulative distribution diameter $D_{50}$ of up to 50 nm, more preferably up to 30 nm, both as measured by the dynamic light scattering method using laser light. If the diameters ($D_{50}$) of the cores and the core/shell type particles exceed the upper limits, undesirably the dispersion may become opaque. The lower limit of diameter $D_{50}$ of the cores is at least 5 nm, though not critical. The lower limit of diameter $D_{50}$ of the core/shell type particles is at least 6 nm, though not critical. Notably, the volume basis 50% cumulative distribution diameter ($D_{50}$, also known as "average particle size") is measured by Nanotrac® UPA-EX150 (Nikkiso Co., Ltd.), for example.

Examples of the aqueous dispersing medium in which core/shell type tetragonal titanium oxide solid-solution particles are dispersed include water and a mixture of water and a hydrophilic organic solvent in an arbitrary ratio. Water is preferably deionized water (ion exchanged water), distilled water, or pure water. Preferred hydrophilic organic solvents are alcohols such as methanol, ethanol, and isopropanol. An amount of the hydrophilic organic solvent mixed is preferably 0 to 30% by weight based on the aqueous dispersing medium. If the amount of the hydrophilic organic solvent exceeds 30 wt%, undesirably it can serve as a compatibilizing agent for the alcohol which is not fully compatible with water and to be added in step (B). Inter alia, deionized water or pure water is most preferred for productivity and cost.

In the colloidal dispersion of the core/shell type tetragonal titanium oxide particles in the aqueous dispersing medium, the core/shell type tetragonal titanium oxide solid-solution particles are preferably present in a concentration of 0.1% to less than 10% by weight, more preferably 0.5 to 5% by weight, and even more preferably 1 to 3% by weight. It is acceptable that the aqueous dispersing medium contains a basic substance (dispersant) and other agents which are used in the preparation of the core/shell type tetragonal titanium oxide solid-solution particles. In particular, since the basic substance has the functions of pH adjusting agent and dispersing agent, it may be used as an aqueous solution having a suitable concentration along with the aqueous dispersing medium. However, it is preferred that the colloidal dispersion of core/shell type tetragonal titanium oxide solid-solution particles be free of any dispersant (basic substance) other than ammonia, alkali metal hydroxides, phosphates, hydrogenphosphates, carbonates, and hydrogencarbonates. This is because the inclusion of a selected basic substance eliminates a positive need for a polymeric dispersant which is otherwise necessary as a dispersant for titanium oxide microparticles in the prior art, and accordingly avoids any detrimental impacts which are exerted on mar resistance and substrate adhesion of a coating or cured film when a titanium oxide microparticle water dispersion containing a polymeric dispersant is applied to coating compositions.

Examples of the basic substance (dispersant) which can be present in the colloidal dispersion of core/shell type tetragonal titanium oxide solid-solution particles include ammonia, lithium hydroxide, sodium hydroxide, potassium hydroxide, cesium hydroxide, monolithium dihydrogenphosphate, monosodium dihydrogenphosphate, monopotassium

dihydrogenphosphate, monocesium dihydrogenphosphate, dilithium hydrogenphosphate, disodium hydrogenphosphate, dipotassium hydrogenphosphate, dicesium hydrogenphosphate, trilithium phosphate, trisodium phosphate, tripotassium phosphate, tricesium phosphate, lithium hydrogencarbonate, sodium hydrogencarbonate, potassium hydrogencarbonate, cesium hydrogencarbonate, lithium carbonate, sodium carbonate, potassium carbonate, and cesium carbonate. Inter alia, ammonia and sodium hydroxide are preferred.

The colloidal dispersion of core/shell type tetragonal titanium oxide solid-solution particles thus constructed has high transparency. Specifically, the dispersion gives a transmittance of preferably at least 80%, more preferably at least 85%, and even more preferably at least 90%, when measured by transmitting light of wavelength 550 nm through a quartz cell having an optical path length of 1 mm which is filled with the colloidal dispersion of core/shell type tetragonal titanium oxide solid-solution particles diluted to a concentration of 1% by weight. The transmittance is readily determined by UV/visible transmission spectroscopy.

When a colloidal dispersion of core/shell type tetragonal titanium oxide particles having tin and manganese incorporated in solid solution is prepared by the method to be described below, the solid-solution particles having a specific cumulative particle size distribution diameter can be formed without mechanical unit operations like pulverizing and sifting steps. Thus the method ensures very high production efficiency as well as very high transparency.

<u>Method for preparation of colloidal dispersion of core/shell type tetragonal titanium oxide solid-solution particles</u>

The method for preparing a water dispersion of core/shell type tetragonal titanium oxide particles having tin and manganese incorporated in solid solution involves the following steps (a) and (b) which are described below in detail.

<u>Step (a)</u>

In step (a), a water dispersion of tetragonal titanium oxide microparticles having tin and manganese incorporated in solid solution is first prepared. The technique of preparing the water dispersion is not particularly limited. In the preferred procedure, starting materials including a titanium compound, tin compound, manganese compound, basic substance and hydrogen peroxide are reacted in an aqueous dispersing medium to form a solution of peroxotitanate containing tin and manganese, which is subjected to hydrothermal reaction, yielding a water dispersion of tetragonal titanium oxide microparticles having tin and manganese incorporated in solid solution.

The former stage of reaction to form a solution of peroxotitanate containing tin and manganese may follow one procedure involving the steps of adding a basic substance to a starting titanium compound in an aqueous dispersing medium to form titanium hydroxide, removing impurity ions, adding hydrogen peroxide to form peroxotitanate, adding a tin and manganese compound thereto to form a tin and manganese-containing peroxotitanate solution; or another procedure involving the steps of adding a tin and manganese compound to a starting titanium compound in an aqueous dispersing medium, adding a basic substance thereto to form titanium hydroxide containing tin and manganese, removing impurity ions, and adding hydrogen peroxide to form a tin and manganese-containing peroxotitanate solution.

Examples of the starting titanium compound include salts of titanium with mineral acids such as hydrochloride, nitrate and sulfate, salts of titanium with organic acids such as formate, citrate, oxalate, lactate and glycolate, and titanium hydroxide which is precipitated by adding alkali to such aqueous solution for hydrolysis. One or a mixture of two or more of the foregoing may be used.

The tin compound may be derived from any of tin salts, while other candidates include tin oxide and tin chalcogenides such as tin sulfide, with tin oxide being preferred. Suitable tin salts include tin halides such as tin fluoride, tin chloride, tin bromide and tin iodide, tin halogenoids such as tin cyanide and tin isothiocyanide, and tin mineral acid salts such as tin nitrate, tin sulfate, and tin phosphate. Of these, tin chloride is preferably used for stability and availability. In the tin salts, tin may have a valence of 2 to 4, with tetravalent tin being preferred. The tin salt is used so as to give the solid-solution content defined above. Also the aqueous dispersing medium and basic substance may be selected from the afore-mentioned examples and used in the afore-mentioned formulation.

The manganese compound may be derived from any of manganese salts, while other candidates include manganese oxide and manganese chalcogenides such as manganese sulfide, with manganese oxide being preferred. Suitable manganese salts include manganese halides such as manganese fluoride, manganese chloride, manganese bromide and manganese iodide, manganese halogenoids such as manganese cyanide and manganese isothiocyanide, and manganese mineral acid salts such as manganese nitrate, manganese sulfate, and manganese phosphate. Of these, manganese chloride is preferably used for stability and availability. In the manganese salts, manganese may have a valence of 2 to 7, with divalent manganese being preferred.

Hydrogen peroxide serves to convert the starting titanium compound or titanium hydroxide to peroxotitanate, that is, a titanium oxide-base compound having Ti-O-O-Ti bond. Typically aqueous hydrogen peroxide is used. The amount of hydrogen peroxide added is preferably 1.5 to 5 times the total moles of Ti, Sn and Mn. The reaction of hydrogen peroxide to convert the starting titanium compound or titanium hydroxide to peroxotitanate is preferably conducted at a

temperature of 5 to 60°C and for a time of 30 minutes to 24 hours.

The tin and manganese-containing peroxotitanate solution may contain a basic or acidic substance for pH adjustment or the like. Exemplary basic substances include ammonia and analogs as mentioned above. Exemplary acidic substances include mineral acids such as sulfuric acid, nitric acid, hydrochloric acid, carbonic acid, phosphoric acid, and hydrogen peroxide, and organic acids such as formic acid, citric acid, oxalic acid, lactic acid, and glycolic acid. The tin and manganese-containing peroxotitanate solution is preferably at pH 1 to 7, more preferably pH 4 to 7, for safe handling.

The later stage of reaction to form a colloidal dispersion of tetragonal titanium oxide microparticles having tin and manganese incorporated in solid solution is by subjecting the tin and manganese-containing peroxotitanate solution to hydrothermal reaction under conditions: a pressure of 0.01 to 4.5 MPa, preferably 0.15 to 4.5 MPa, a temperature of 80 to 250°C, preferably 120 to 250°C, and a time of 1 minute to 24 hours. By this reaction, the tin and manganese-containing peroxotitanate is converted to tetragonal titanium oxide microparticles having tin and manganese incorporated in solid solution.

In step (A), the colloidal dispersion of tetragonal titanium oxide nanoparticles having tin and manganese incorporated in solid solution is blended with a monohydric alcohol, ammonia, and a tetraalkoxysilane (e.g. tetraethoxysilane).

Examples of the monohydric alcohol used herein include methanol, ethanol, propanol, isopropyl alcohol, and a mixture thereof, with ethanol being preferred. An appropriate amount of the monohydric alcohol used is up to 100 parts, more preferably up to 30 parts by weight per 100 parts by weight of the titanium oxide particle dispersion. By changing the amount of the monohydric alcohol blended, the thickness of silicon oxide shells formed around cores of tetragonal titanium oxide having tin and manganese incorporated in solid solution in the subsequent step (B) can be controlled. In general, as the amount of the monohydric alcohol blended increases, the thickness of silicon oxide shells increases because the solubility of silicon reactant (tetraalkoxysilane) in the reaction system increases while the dispersed state of titanium oxide is not adversely affected at all. That is, the water dispersion of core/shell type tetragonal titanium oxide particles having tin and manganese incorporated in solid solution can be formed in the subsequent step so as to fall in a specific cumulative distribution diameter, without mechanical unit operations like pulverizing and sifting steps, while the dispersion can be endowed with transparency in the visible region. Although the preferred amount of the monohydric alcohol used is up to 30 parts by weight as mentioned above, a more amount of the alcohol may be used. Since the alcohol can be selectively removed in the subsequent concentration step, a suitable operation may be added if necessary. The lower limit of the amount of the monohydric alcohol used is preferably at least 5 parts, more preferably at least 10 parts by weight.

Ammonia used herein is typically aqueous ammonia. Instead of addition of aqueous ammonia, ammonia gas may be blown into the water dispersion of tetragonal titanium oxide particles having tin and manganese incorporated in solid solution. It is also acceptable to add a reagent capable of generating ammonia in the dispersion, instead of addition of aqueous ammonia. The concentration of aqueous ammonia is not particularly limited, and any commercially available aqueous ammonia may be used. In the preferred procedure, 28 wt% conc. aqueous ammonia is used and added in increments until the water dispersion of tetragonal titanium oxide particles having tin and manganese incorporated in solid solution reaches pH 9 to 12, more preferably pH 9.5 to 11.5.

The tetraalkoxysilane may be selected from the aforementioned examples, with tetraethoxysilane being preferred. Tetraethoxysilane may be used as such while a (partial) hydrolysate of tetraethoxysilane is also useful. Tetraethoxysilane or (partial) hydrolysate thereof may be any of commercially available products, for example, KBE-04 (tetraethoxysilane by Shin-Etsu Chemical Co., Ltd.), Silicate 35 and Silicate 45 (partial hydrolytic condensate of tetraethoxysilane, Tama Chemicals Co., Ltd.), and ESI40 and ESI48 (partial hydrolytic condensate of tetraethoxysilane, Colcoat Co., Ltd.). Tetraethoxysilane or tetraalkoxysilanes may be used alone or in admixture of two or more.

The tetraalkoxysilane is blended in such an amount as to give 20 to 50%, preferably 25 to 45%, and more preferably 30 to 40% by weight of silicon oxide after hydrolysis, based on the silicon oxide-coated titanium oxide. Less than 20 wt% of silicon oxide indicates insufficient shell formation whereas more than 50 wt% of silicon oxide may promote agglomeration of particles, rendering the dispersion opaque.

When the water dispersion of tetragonal titanium oxide microparticles having tin and manganese incorporated in solid solution is blended with a monohydric alcohol, ammonia, and a tetraalkoxysilane (e.g. tetraethoxysilane), any suitable mixer, for example, a magnetic stirrer, mechanical mixer, or shaker may be used.

Step (b)

In step (b), the mixture of step (a) is rapidly heated for forming core/shell type tetragonal titanium oxide solid-solution particles each consisting of a nanosized core of tetragonal titanium oxide having tin and manganese incorporated in solid solution and a shell of silicon oxide around the core.

The means of rapidly heating the mixture of step (a) may be any of the existing heating means, for example, microwave heating, a microreactor of high heat exchange efficiency, and heat exchanger with an external heat source

of a high heat capacity. Inter alia, microwave heating is preferred because of uniform and rapid heating ability. The step of heating the mixture by applying microwave radiation may be either batchwise or continuous.

The rapid heating step is preferably at such a rate as to elevate the temperature from room temperature to immediately below the boiling point of the dispersing medium (typically about 10 to 80°C) within a time of 10 minutes. If the heating step takes more than 10 minutes, undesirably the particles tend to agglomerate together.

Where the rapid heating step includes microwave heating, the electromagnetic wave may be selected from the frequency range of 300 MHz to 3 THz. For example, according to the Radio Law of Japan, the microwave frequency band that can be utilized is limited to 2.45 GHz, 5.8 GHz, 24 GHz and the like. Of these, the 2.45 GHz band is most often utilized on a commercial basis, and magnetron oscillators in this frequency band are available at an acceptable price. The microwave standard differs depending on the law, economical status and the like of a particular country or region. Technically the frequency need not be limited. As long as the rated power is in the range of 100 W to 24 kW, preferably 100 W to 20 kW, any commercial microwave heater may be used, for example, μReactor Ex (Shikoku Instrumentation Co., Inc.) or Advancer (Biotage Japan Ltd.).

Desired microwave heating may be completed within a time of 10 minutes by adjusting the power of the microwave heater and by adjusting the volume of reaction solution in the case of batchwise reaction or the flow rate of reaction solution in the case of continuous reaction.

The colloidal dispersion of core/shell type tetragonal titanium oxide microparticles having tin and manganese incorporated in solid solution, thus obtained, may be used in the manufacture of the organosol according to the invention.

The inorganic oxide colloidal water dispersion preferably has a solids concentration of 1 to 30%, more preferably 5 to 25%, and even more preferably 10 to 20% by weight of inorganic oxide particles. A concentration of less than 1 wt% may be detrimental to the industrial efficiency of organosol manufacture. If the concentration exceeds 30 wt%, undesirably the colloidal dispersion may lose fluidity and gel.

Also preferably the inorganic oxide colloidal dispersion is at pH 2 to 12, more preferably pH 3 to 11, even more preferably pH 4 to 10. If the pH is below 2 or above 12, undesirably the colloidal dispersion may lose fluidity and gel.

Step (B)

Step (B) is to add an alcohol which is not fully compatible with water and forms a two-phase system, to the inorganic oxide colloidal dispersion. Under ordinary conditions, the alcohol is not miscible with the inorganic oxide colloidal dispersion, and the inorganic oxide disperse phase does not migrate from the dispersion to the alcohol.

The alcohol to be added in step (B) is at least one member selected from among straight, branched or cyclic monohydric alcohols of 4 to 8 carbon atoms which optionally have an aromatic moiety, and monohydric alcohols of 3 to 8 carbon atoms which are (partially) substituted with fluorine. Alcohols of up to 2 carbon atoms cannot be used herein because they are miscible with water at an arbitrary ratio under ordinary conditions whereas alcohols of more than 8 carbon atoms may be difficult to apply in step (B) because of stronger paraffinic nature. The straight, branched or cyclic monohydric alcohols of 4 to 8 carbon atoms which optionally have an aromatic moiety are more preferred. The fluorine substitution may be either all substitution (perfluoroalkyl) or partial substitution. Since alcohols of long-chain alkyl of all substitution type are rather expensive, the number of substitution may be adjusted while taking into account the cost. If the hydroxyl number is 2 or more, alcohols tend to become more water-soluble and too viscous to handle.

Examples of the alcohol added in step (B) include straight, branched or cyclic alcohols such as 1-butanol, 2-butanol, isobutyl alcohol, 1-pentanol, 2-pentanol, 3-pentanol, neopentyl alcohol, cyclopentanol, 1-hexanol, 2-hexanol, 3-hexanol, tert-hexyl alcohol, and cyclohexanol; aromatic alcohols such as phenol, o-cresol, m-cresol, p-cresol, and benzyl alcohol; and fluorine (partially) substituted straight or cyclic alcohols such as heptafluoropropan-1-ol, heptafluoropropan-2-ol, 3,3,4,4,4-pentafluorobutan-1-ol, nonafluorobutan-1-ol, and nonafluorobutan-2-ol.

The alcohol added in step (B) should preferably have a solubility in water at 20°C of 1 (= 1 g alcohol/100 g water) to 30 (= 30 g alcohol/100 g water), more preferably 5 to 28, and even more preferably 10 to 26. An alcohol having a solubility of less than 1 may not exert the desired effect whereas an alcohol having a solubility of more than 30 may be fully compatibilized under the action of the alcohol miscible with water at an arbitrary ratio used in step (A).

The solubility of an alcohol in water may be measured by the standard technique. For example, the alcohol is fed to a burette at 20°C. With stirring, the alcohol is added dropwise to 100 g of pure water in a conical beaker. Dropwise addition is terminated at the time when the alcohol is no longer dissolved, i.e. a two-phase system is formed. The weight gain at this point represents the solubility of the alcohol in 100 g water.

The amount of the alcohol added in step (B) is preferably 10 to 1,000% by weight, more preferably 15 to 500% by weight, and even more preferably 20 to 300% by weight, based on the water content in the inorganic oxide colloidal water dispersion from step (A). If the amount of the alcohol is less than 10 wt%, extraction efficiency may not be high. An amount of the alcohol in excess of 1,000 wt% may be undesirable because industrial and environmental problems arise from the massive use of organic solvent.

Step (C)

Step (C) is to add a silane compound having the general formula (I) and/or a (partial) hydrolytic condensate thereof to the inorganic oxide colloidal water dispersion.

$$R^1Si(OR^2)_3 \qquad (I)$$

Herein $R^1$ is a $C_1$-$C_{15}$ organic group which may have a (meth)acrylic moiety, and $R^2$ is $C_1$-$C_4$ alkyl.

Exemplary of the compound having formula (I) are silane compounds having a carbon group which may be substituted with (meth)acryloyloxy moiety, including methyltrimethoxysilane, methyltriethoxysilane, ethyltrimethoxysilane, ethyltriethoxysilane, propyltrimethoxysilane, propyltriethoxysilane, (meth)acryloyloxymethyltrimethoxysilane, (meth)acryloyloxymethyltriethoxysilane, (meth)acryloyloxyethyltrimethoxysilane, (meth)acryloyloxyethyltriethoxysilane, (meth)acryloyloxypropyltrimethoxysilane, (meth)acryloyloxypropyltriethoxysilane, (meth)acryloyloxyoctyltrimethoxysilane, and (meth)acryloyloxyoctyltriethoxysilane.

These compounds may be synthesized or commercially available. Commercial products include methyltrimethoxysilane "KBM-13", propyltrimethoxysilane "KBM-3033", acryloyloxypropyltrimethoxysilane "KBM-5103", and methacryloyloxypropyltrimethoxysilane "KBM-503", all available from Shin-Etsu Chemical Co., Ltd.

The surface-treated titanium oxide of the present invention is obtained by treating the inorganic oxide with 11 to 200% by weight, preferably 40 to 190% by weight, more preferably 60 to 180% by weight of the total amount of the silane compound of formula (I) and/or a (partial) hydrolytic condensate thereof and the surface treating component having the general formula (II) in step (H) described later, based on the solid content of the inorganic oxide colloidal water dispersion of step (A). If the amount exceeds 200 wt%, the proportion of inorganic oxide (as effective component) in the organosol becomes relatively low, resulting in insufficient UV-shielding capability. If the amount is less than 11 wt%, it is difficult to ensure the dispersion stability of inorganic oxide microparticles in the organic solvent.

The amount of the silane compound and/or a (partial) hydrolytic condensate thereof added in step (C) is preferably 10 to 199% by weight, more preferably 20 to 170% by weight, and even more preferably 30 to 150% by weight, based on the solid content of the inorganic oxide colloidal water dispersion of step (A). If the amount exceeds 199 wt%, the proportion of inorganic oxide (as effective component) in the organosol may become relatively low. If the amount is less than 10 wt%, it may be difficult to ensure the dispersion stability of inorganic oxide microparticles in the organic solvent.

In step (C), the mode of addition of the silane compound and/or a (partial) hydrolytic condensate thereof may be dropwise addition in liquid, dropwise addition outside liquid, or addition in portions, with the dropwise addition in liquid being preferred.

In step (C), the dispersion is preferably kept at a temperature of 0 to 45°C, more preferably 5 to 40°C, and even more preferably 10 to 35°C during the addition of the silane compound and/or a (partial) hydrolytic condensate thereof. At a temperature below 0°C, the inorganic oxide colloidal water dispersion may be altered via a state change by freezing. At a temperature above 45°C, the silane compound and/or a (partial) hydrolytic condensate thereof may unexpectedly undergo hydrolytic condensation reaction.

Step (D)

Step (D) is to irradiate microwave to the inorganic oxide colloidal water dispersion. For microwave irradiation, the electromagnetic wave may be selected from the frequency range of 300 MHz to 3 THz. For example, according to the Radio Law of Japan, the microwave frequency band that can be utilized is limited to 2.45 GHz, 5.8 GHz, 24 GHz and the like. Of these, the 2.45 GHz band is most often utilized on a commercial basis, and magnetron oscillators in this frequency band are available at an acceptable price. The microwave standard differs depending on the law, economical status and the like of a particular country or region. Technically the frequency need not be limited. As long as the rated power is in the range of 100 W to 24 kW, preferably 100 W to 20 kW, any commercial microwave heater may be used, for example, μReactor Ex (Shikoku Instrumentation Co., Inc.) or Advancer (Biotage Japan Ltd.).

Microwave irradiation brings about a temperature rise of the reaction solution. After microwave irradiation, the temperature is preferably in a range of 10 to 150°C, more preferably 60 to 100°C, and even more preferably 80 to 90°C. If the temperature is below 10°C, a longer time may be needed for reaction. If the temperature is above 150°C, the solvent of the inorganic oxide colloidal water dispersion will boil and the reaction system is difficult to handle.

The time of microwave irradiation is preferably 60 to 3,600 seconds, more preferably 120 to 1,800 seconds, and even more preferably 180 to 900 seconds. If the time is shorter than 60 seconds, insufficient reaction may take place between the silane added in step (C) and surface hydroxyl groups on the inorganic oxide microparticles. A time of longer than 3,600 seconds may be undesirable in industrial efficiency. Microwave irradiation is performed while adjusting other reaction conditions (pH and concentration) such that the reaction time may fall in the above range.

In step (D), microwave irradiation is accompanied by stirring. Stirring may be mechanical stirring, magnetic

stirring or shaking. With stirring, the hydrophobic alcohol added in step (B) and the inorganic oxide water dispersion become suspended, allowing microparticles surface treated with microwave to effectively migrate to the hydrophobic alcohol. Stirring is preferably turbulent stirring. The degree of stirring may be estimated by computing a Reynolds number of a system. Stirring preferably provides a Reynolds number of 3,000 to 1,000,000, more preferably 5,000 to 500,000, and even more preferably 10,000 to 200,000. A Reynolds number of less than 3,000 may become laminar flow stirring, interfering with efficient suspension. If the Reynolds number is more than 1,000,000, the amount of energy required for stirring may become unnecessarily large, which is undesirable in industrial efficiency. It is noted that Reynolds number (Re) is determined from equation (1):

$$Re = \rho \cdot n \cdot d^2 / \mu \qquad \text{equation (1)}$$

wherein $\rho$ is a density (kg/$m^3$), n is a revolution (rps), d is an impeller length (m), and $\mu$ is a viscosity (Pa·s).

The organosol that the invention deals with has a density $\rho$ of 900 to 2,000 kg/$m^3$, preferably 1,000 to 1,500 kg/$m^3$, and a viscosity $\mu$ of 0.001 to 0.05 Pa·s, preferably 0.002 to 0.01 Pa·s. For example, when an organosol with a density $\rho$ of 1,000 kg/$m^3$ and a viscosity $\mu$ of 0.002 Pa·s is stirred by rotating a magnetic stirrer with a length of 5 cm at 700 rpm, Re is computed to be -15,000. By a choice of n and d, Re may be adjusted to fall in the desired range.

When stirring is carried out in a baffle built-in reactor, an improvement in stirring efficiency is achievable.

Step (E)

Step (E) is to add an organic solvent. This step is preferably carried out at a temperature of 0 to 45°C, more preferably 5 to 40°C, and even more preferably 10 to 30°C. At a temperature below 0°C, the inorganic oxide colloidal water dispersion may be altered as the water component freezes. At a temperature above 45°C, volatile organic compounds (VOC) will be released to the ambient or working environment, which is unfavorable for safety and working environment or hygiene.

The organic solvent added in step (E) is typically selected from hydrocarbon compounds of 5 to 30 carbon atoms, alcohol, ether, ester, ketone, and amide compounds. Exemplary organic solvents are described below. Suitable hydrocarbon compounds of 5 to 30 carbon atoms include pentane, hexane, heptane, octane, nonane, decane, undecane, dodecane, tridecane, tetradecane, pentadecane, hexadecane, heptadecane, octadecane, nonadecane, eicosane, docosane, trieicosane, tetraeicosane, pentaeicosane, hexaeicosane, heptaeicosane, octaeicosane, nonaeicosane, triacontane, benzene, toluene, o-xylene, m-xylene, p-xylene, petroleum ether (or a mixture of the foregoing), kerosene, ligroin, and nujol. Suitable mono- to polyhydric alcohols include methanol, ethanol, 1-propanol, 2-propanol, cyclopentanol, ethylene glycol, propylene glycol, β-thiadiglycol, butylene glycol, and glycerol. Suitable ethers include diethyl ether, dipropyl ether, cyclopentyl methyl ether, ethylene glycol dimethyl ether, diethylene glycol dimethyl ether, triethylene glycol dimethyl ether, ethylene glycol monomethyl ether, ethylene glycol monoethyl ether, ethylene glycol monopropyl ether, ethylene glycol monobutyl ether, propylene glycol monomethyl ether (PGM), propylene glycol monoethyl ether, propylene glycol monopropyl ether, propylene glycol monobutyl ether, butylene glycol monomethyl ether, butylene glycol monoethyl ether, butylene glycol monopropyl ether, and butylene glycol monobutyl ether. Suitable esters include methyl formate, ethyl formate, propyl formate, butyl formate, methyl acetate, ethyl acetate, propyl acetate, butyl acetate, methyl propionate, ethyl propionate, propyl propionate, butyl propionate, methyl butyrate, ethyl butyrate, propyl butyrate, butyl butyrate, methyl benzoate, ethyl benzoate, propyl benzoate, butyl benzoate, dimethyl oxalate, diethyl oxalate, dipropyl oxalate, dibutyl oxalate, dimethyl malonate, diethyl malonate, dipropyl malonate, dibutyl malonate, ethylene glycol diformate, ethylene glycol diacetate, ethylene glycol dipropionate, ethylene glycol dibutyrate, propylene glycol diacetate, propylene glycol dipropionate, propylene glycol dibutyrate, ethylene glycol methyl ether acetate, propylene glycol methyl ether acetate (PGMEA), butylene glycol monomethyl ether acetate, ethylene glycol ethyl ether acetate, propylene glycol ethyl ether acetate, and butylene glycol monoethyl ether acetate. Suitable ketones include acetone, diacetone alcohol, diethyl ketone, methyl ethyl ketone, methyl isobutyl ketone, methyl n-butyl ketone, dibutyl ketone, cyclopentanone, cyclohexanone, cycloheptanone, and cyclooctanone. Suitable amides include dimethylformamide, dimethylacetamide, tetraacetylethylenediamide, tetraacetylhexamethylenetetramide, and N,N-dimethylhexamethylenediamine diacetate.

The amount of the organic solvent added in step (E) is preferably 50 to 1,000% by weight, more preferably 100 to 500% by weight, and even more preferably 120 to 300% by weight, based on the water component in the inorganic oxide colloidal water dispersion in step (A). If the amount of the organic solvent is less than 50 wt%, water may not be fully removed in the subsequent step (F). An amount of the organic solvent in excess of 1,000 wt% may be undesirable because industrial and environmental problems arise from the massive use of organic solvent.

Step (E) of adding the organic solvent ensures that surface treated inorganic oxide microparticles are uniformly dispersed in the organic solvent phase. As a result of addition of the solvent in step (E), the system may form either a

uniform phase or two phases. When two phases are formed, the organic layer may be separated by decantation.

Step (F)

Step (F) is to remove water from the dispersion. Water removal is preferably carried out by azeotropic distillation and/or ultrafiltration.

In step (F), azeotropic distillation intends to remove water originating from the inorganic oxide colloidal water dispersion. The organic solvent in azeotropic mixture with water may originate from step (B) or (E). Azeotropic distillation is a phenomenon that a mixture of water and the organic solvent in a proportion as estimated from the liquid/gas equilibrium curve is distilled out when the total of vapor pressures of water and the organic solvent is in balance with the system pressure.

Step (F) is preferably carried out under a pressure of 200 to 760 mmHg, more preferably 300 to 760 mmHg, and even more preferably 400 to 760 mmHg. Under a pressure of less than 200 mmHg, the mixture may bump and become difficult to control. A pressure beyond 760 mmHg may interfere with water evaporation.

Step (F) is preferably carried out at a temperature of 50 to 250°C, more preferably 60 to 200°C, and even more preferably 80 to 150°C. At a temperature below 50°C, distillation takes a time. A temperature above 250°C may alter the organosol. The pressure is adjusted such that step (F) may be carried out in the temperature range.

Heating required in step (F) may be any of various heating modes such as heat exchange with heating medium, induction heating, and microwave heating.

In step (F), ultrafiltration may be carried out instead of or in combination with azeotropic distillation. Ultrafiltration may be carried out by passing through pores in the surface of an inorganic and/or organic substrate. The material of the substrate is not particularly limited as long as it is porous. Preferably the substrate has pores with an average diameter of 5 to 50 nm, more preferably 5 to 30 nm. A pore diameter of less than 5 nm may lead to a slow filtration rate whereas a pore diameter in excess of 30 nm may allow the dispersed phase of the sol to flow out to the filtrate side.

Ultrafiltration may be carried out while adding an organic solvent, which is selected in consideration of a difference in the permeability constant of filter membrane depending on the type of solvent.

Removal of water can be confirmed by measuring the water concentration at the end of this step. One typical confirmation method is amperometric titration using Karl Fischer's reagent. Suitable titrators which can be used to this end are, for example, AQV-2100 from Hiranuma Sangyo Corp. and KF-200 from Mitsubishi Chemical Analytech Co., Ltd.

At the end of step (F), the water concentration is preferably not more than 1% by weight, more preferably not more than 0.5% by weight, and even more preferably not more than 0.1% by weight. A water concentration of more than 1 wt% may cause white haze to a mixture of the organosol and a resin. Although the lower limit of the water concentration at the end of step (F) is not critical, the lower limit concentration is preferably about 0.1% by weight. Since the organic solvent added in step (E) sometimes contains a certain proportion of water, an attempt to reduce the water concentration below 0.1 wt% via only step (F) is sometimes unfavorable in view of energy efficiency. If the water concentration does not reach a desired or effective level via options described above, further removal of water such as by subsequent step (G) may be carried out.

Step (G)

Step (G) is to remove a trace of water in the organosol which has not been removed in the previous step (F). In step (G), water is removed to a water concentration of 1,000 ppm or less, more preferably 500 ppm or less, even more preferably 100 ppm or less, and most preferably 10 ppm or less.

In the practice of step (G), physical adsorption using a zeolite having pores with a diameter of 0.3 to 1 nm (3 to 10 angstroms Å) and/or chemical reaction using ortho-organic acid ester or gem-dialkoxyalkane having the general formula (III) may be used.

$$(R^5O)\ (R^6O)\ CR^7R^8 \qquad \text{(III)}$$

Herein $R^5$ and $R^6$ are each independently a $C_1$-$C_{10}$ hydrocarbon group and may bond together to form a ring, $R^7$ and $R^8$ are each independently a $C_1$-$C_{10}$ hydrocarbon group and may bond together to form a ring.

Exemplary materials which can be used as the zeolite include those of the following chemical formulae: $K_4Na_4[Al_8Si_8O_{32}]$, $Na[AlSi_2O_6]$, $Na_2[Al_2Si_7O_{18}]$, $(K,Ba,Sr)_2Sr_2Ca_2(Ca,Na)_4[Al_{18}Si_{18}O_{72}]$, $Li[AlSi_2O_6]O$, $Ca_8Na_3[Al_{19}Si_{77}O_{192}]$, $(Sr,Ba)_2[Al_4Si_{12}O_{32}]$, $(Sr,Ba)_2[Al_4Si_{12}O_{32}]$, $(Ca_{0.5},Na,K)_4[Al_4Si_8O_{24}]$, $CaMn[Be_2Si_5O_{13}(OH)_2]$, $(Na,K,Ca_{0.5},Sr_{0.5},Ba_{0.5},Lg_{0.5})_6[Al_6Si_{30}O_{72}]$, $Ca[Al_2Si_3O_{10}]$, $(Ca_{0.5},Na,K)_{4-5}[Al_{4-5}Si_{20-19}O_{48}]$, $Ba[Al_2Si_3O_{10}]$, $(Ca,Na_2)[Al_2Si_4O_{12}]$, $K_2(Na,Ca_{0.5})_8[Al_{10}Si_{26}O_{72}]$, $(Na,\ Ca_{0.5},Mg_{0.5},K)_z[Al_zSi_{12-z}O_{24}]$, $(K,Na,Mg_{0.5},Ca_{0.5})_6[Al_6Si_{30}O_{72}]$, $NaCa_{2.5}[Al_6Si_{10}O_{32}]$, $Na_4[Zn_2Si_7O_{18}]$, $Ca[Al_2Si_2O_8]$, $(Na_2,Ca,K_2)_4[Al_8Si_{16}O_{48}]$, $Na_5[Al_5Si_{11}O_{32}]$, $(Na,Ca)_{6-8}[(Al,Si)_{20}O_{40}]$, $Ca[Al_2Si_6O_{16}]$, $Na_3Mg_3Ca_5[Al_{19}Si_{117}O_{272}]$, $(Ba_{0.5},Ca_{0.5},K,Na)_5[Al_5Si_{11}O_{32}]$,

$(Ca_{0.5},Sr_{0.5},Ba_{0.5},Mg_{0.5},Na,K)_9[Al_9Si_{27}O_{72}]$, $Li_2Ca_3[Be_3Si_3O_{12}]F_2$, $K_6[Al_4Si_6O_{20}]B(OH)_4Cl$, $Ca_4[Al_8Si_{16}O_{48}]$, $K_4Na_{12}[Be_8Si_{28}O_{72}]$, $(Pb_7Ca_2)[Al_{12}Si_{36}(O,OH)_{100}]$, $(Mg_{2.5}K_2Ca_{1.5})[Al_{10}Si_{26}O_{72}]$, $K_5Ca_2[A1_9S1_{23}O_{64}]$, $Na_{16}Ca_{16}[Al_{48}Si_{72}O_{240}]$, $K_9[Al_9Si_{23}O_{64}]$, $(Na_2,Ca,K_2)_4[Al_8Si_{40}O_{96}]$, $Na_3Ca_4[Al_{11}Si_{85}O_{192}]$, $Na_2[Al_2Si_3O_{10}]$, $CaKMg[Al_5Si_{13}O_{36}]$, $(Ca_{5.5}Li_{3.6}K_{1.2}Na_{0.2})Li_8[Be_{24}P_{24}O_{96}]$, $Ca_2[Al_4Si_4O_{15}(OH)_2]$, $(K,Ca_{0.5},Na,Ba_{0.5})_{10}[Al_{10}Si_{32}O_{84}]$, $K_9Na(Ca,Sr)[Al_{12}Si_{24}O_{72}]$, $(K,Na,Ca_{0.5},Ba_{0.5})_z[Al_zSi_{16-z}O_{32}]$, $(Cs,Na)[AlSi_2O_6]$, $Ca_2[Be(OH)_2Al_2Si_4O_{13}]$, $Ca[Al_2Si_3O_{10}]$, $Ca[Al_2Si_7O_{18}]$, $(Ca_{0.5},Na,K)_9[Al_9Si_{27}O_{72}]$, $NaCa[Al_3Si_{17}O_{40}]$, $Ca_2Na[Al_5Si_5O_{20}]$, $Ca[Al_2Si_6O_{16}]$, $Ca_4(K_2,Ca,Sr,Ba)_3Cu_3(OH)_8[Al_{12}Si_{12}O_{48}]$, $Ca[Al_2Si_4O_{12}]$, $Ca[Be_3(PO_4)_2(OH)_2]$, $K_zCa_{(1.5-0.5z)}[Al_3Si_3O_{12}]$, and $Ca[Al_2Si_6O_{16}]$ wherein z is a number of 0 to 1. Those materials of the above chemical formulae, preferably having pores with a diameter of 0.3 to 1 nm (3 to 10 Å) may be used. The pore diameter is preferably 0.3 to 1nm (3 to 10 Å), more preferably 0.4 to 0.8nm (4 to 8 Å), and even more preferably 0.4 to 0.6nm (4 to 6 Å). If the pore diameter is less than 0.3nm (3 Å), sufficient adsorption of water may be difficult. If the pore diameter exceeds 1nm (10 Å), adsorption of water may take a time.

Suitable dewatering zeolites are commercially available under the trade name of Molecular Sieve 3A, Molecular Sieve 4A, Molecular Sieve 5A, Molecular Sieve 6A, Molecular Sieve 7A, Molecular Sieve 8A, Molecular Sieve 9A, Molecular Sieve 10A, Molecular Sieve 3X, Molecular Sieve 4X, Molecular Sieve 5X, Molecular Sieve 6X, Molecular Sieve 7X, Molecular Sieve 8X, Molecular Sieve 9X, and Molecular Sieve 10X, which may be used alone or in combination. For example, LTA framework zeolite having a pore diameter of about 0.4nm (4 Å) is commercially available as Catalog No. 25958-08 from Kanto Kagaku Co., Ltd.

Zeolite is preferably used in an amount of 1 to 20% by weight, more preferably 2 to 15% by weight, and even more preferably 5 to 10% by weight, based on the organosol from step (F). Less than 1 wt% of zeolite may be too small to exert the dewatering effect whereas more than 20 wt% is unnecessary in practice because the dewatering effect is no longer improved.

Alternatively, step (G) is carried out via chemical reaction using ortho-organic acid ester or gem-dialkoxyalkane having the general formula (III):

$$(R^5O)(R^6O)CR^7R^8 \qquad \text{(III)}$$

wherein $R^5$ and $R^6$ are each independently a $C_1$-$C_{10}$ hydrocarbon group and may bond together to form a ring, $R^7$ and $R^8$ are each independently a $C_1$-$C_{10}$ hydrocarbon group and may bond together to form a ring.

Both the ortho-organic acid ester and gem-dialkoxyalkane have an acetal skeleton in the molecule. The ortho-organic acid ester is an acetal form of organic acid ester, and the gem-dialkoxyalkane is an acetal form of ketone. The acetal compound can be used for dewatering purpose since the acetal compound has the nature that it is decomposed into alcohol and carbonyl compound upon reaction with water. Since water is consumed via the reaction, the same effect as the addition of organic solvent is obtained.

Examples of the ortho-organic acid ester include methyl orthoformate, ethyl orthoformate, propyl orthoformate, butyl orthoformate, methyl orthoacetate, ethyl orthoacetate, propyl orthoacetate, butyl orthoacetate, methyl orthopropionate, ethyl orthopropionate, propyl orthopropionate, butyl orthopropionate, methyl orthobutyrate, ethyl orthobutyrate, propyl orthobutyrate, and butyl orthobutyrate.

Examples of the gem-dialkoxyalkane include acetone dimethyl acetal, acetone diethyl acetal, acetone dipropyl acetal, acetone dibutyl acetal, acetone ethylene glycol acetal, acetone propylene glycol acetal, methyl ethyl ketone dimethyl acetal, methyl ethyl ketone diethyl acetal, methyl ethyl ketone dipropyl acetal, methyl ethyl ketone dibutyl acetal, methyl ethyl ketone ethylene glycol acetal, methyl ethyl ketone propylene glycol acetal, methyl isobutyl ketone dimethyl acetal, methyl isobutyl ketone diethyl acetal, methyl isobutyl ketone dipropyl acetal, methyl isobutyl ketone dibutyl acetal, methyl isobutyl ketone ethylene glycol acetal, methyl isobutyl ketone propylene glycol acetal, cyclopentanone dimethyl acetal, cyclopentanone diethyl acetal, cyclopentanone dipropyl acetal, cyclopentanone dibutyl acetal, cyclopentanone ethylene glycol acetal, cyclopentanone propylene glycol acetal, cyclohexanone dimethyl acetal, cyclohexanone diethyl acetal, cyclohexanone dipropyl acetal, cyclohexanone dibutyl acetal, cyclohexanone ethylene glycol acetal, and cyclohexanone propylene glycol acetal.

With respect to the acetal skeleton compound, if a certain type is preferred among the molecules formed by reaction with water, the compound may be chosen from such anticipation. For example, where water is removed from the organosol and replaced by cyclohexanone and butanol, the purpose may be attained using cyclohexanone dibutyl acetal.

The acetal skeleton compound is preferably used in an amount of 0.5 to 20% by weight, more preferably 2 to 15% by weight, and even more preferably 5 to 10% by weight, based on the organosol from step (F). Less than 0.5 wt% of the compound may be too small to exert the dewatering effect. More than 20 wt% is unnecessary in practice because in most cases, the dewatering effect is no longer improved, and when the organosol containing the acetal skeleton compound is mixed with a resin or the like, the compound can exert unexpected effects like etching.

Step (H)

Step (H) is surface treatment with a silane compound having the general formula (II):

$$(R^3R^4{}_2Si)_2NH \qquad (II)$$

wherein $R^3$ is a $C_1$-$C_{15}$ organic group which may have a (meth)acrylic moiety, and $R^4$ is a $C_1$-$C_6$ alkyl group.

Exemplary of the compound having formula (II) are hexamethyldisilazane, bis[(acryloyloxymethyl)dimethylsilyl]azane, bis[(acryloyloxypropyl)dimethylsilyl]azane, hexaethyldisilazane, and hexapropyldisilazane.

The amount of the silane compound of formula (II) is preferably 1 to 190% by weight, more preferably 20 to 170% by weight, and even more preferably 30 to 150% by weight, based on the solid content of the inorganic oxide colloidal water dispersion of step (A). If the amount is more than 190 wt%, the proportion of inorganic oxide (as effective component) in the organosol may become relatively low. If the amount is less than 1 wt%, it may be difficult to ensure the dispersion stability of inorganic oxide microparticles in the organic solvent.

Step (H) may be carried out while the ammonia gas by-product formed by the reaction is removed using an ion exchange resin. The ion exchange resin which can be used to this end is typically a cation exchange resin, examples of which include Amberlite® IR120B, Amberlite® 200CT, Amberlite® IR124, Amberlite® FPC3500, and Amberlite® IRC76, available from Organo Corp., Diaion® SK104 and Diaion® PK208 available from Mitsubishi Chemical Corp. Instead, removal of ammonia gas may also be carried out by inert gas blowing utilizing the law of partial pressures.

The progress of reaction in step (H) may be monitored by $^{29}Si$ nuclear magnetic resonance (NMR) spectroscopy. The NMR spectroscopy may be applied to either solid or liquid. In the case of solid NMR spectroscopy, since a measurement sample must be evaporated to dryness as pre-treatment, the results do not necessarily reflect the bond states of silicon in the sample. Accordingly it is preferred to monitor by the NMR spectroscopy in liquid state. In the liquid $^{29}Si$ NMR spectroscopy, analysis is preferably made using a test tube and probe both made of silicon-free material. Exemplary of the silicon-free material which can be used in the NMR spectroscopy is polytetrafluoroethylene, typically Teflon®. In the liquid $^{29}Si$ NMR spectroscopy, an appropriate relaxation agent may be used for reducing the measurement time. As the relaxation agent, well-known reagents may be used (see, for example, Organometallics, Volume 27, Issue 4, pp500-502 (2008), and the references therein). In particular, preference is given to tris(acetylacetonato)-iron(III) complex since it is fully soluble in water and organic solvents and does not cause agglomeration of titanium oxide. For example, when several droplets of a solution of tris(acetylacetonato)iron(III) complex in hexadeuterioacetone (acetone-$d_6$) in a concentration of about 1 mol/$dm^3$ are used as the relaxation agent, desirably both the relaxation effect and deuterium lock effect are available.

On analysis by the $^{29}Si$ NMR spectroscopy before and after step (H), a change of the condensation state of trifunctional polysiloxane (T unit) can be examined. A change of the condensation state is determined by examining the proportion of (T0) to (T3), shown below. The condensation degree is in the order of T3 > T2 > T1 > T0, and in most cases, the detection magnetic field becomes on higher magnetic field side in the order of T3 > T2 > T1 > T0. A proportion of condensation state may be estimated from signal intensity. At this point, since $^{29}Si$ nucleus has a negative gyromagnetic ratio ($\gamma_B$), the nuclear Overhauser effect (NOE) becomes inversed, suppressing the nuclear magnetic relaxation prevailing around resonance nucleus. Therefore, measurement conditions are preferably selected such that the negative NOE may not become significant. In the case of pulse Fourier-transform NMR, this problem can be solved using an adequate pulse sequence. For example, an off-resonance pulse sequence is preferably used.

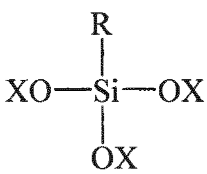
(T0)

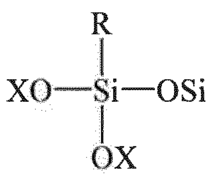
(T1)

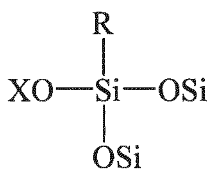
(T2)

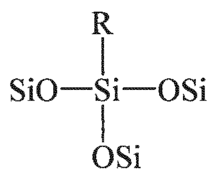
(T3)

Herein R is a $C_1$-$C_{15}$ organic group which may have a (meth)acrylic moiety, and X is hydrogen or $C_1$-$C_4$ alkyl.

The notation of resonance magnetic field may be given by expressing in parts per million (ppm) a difference from the resonance magnetic field based on the resonance of $^{29}Si$ nucleus of tetramethylsilane. According to this notation rule, most often T0 is detectable in the range of -40 to -46 ppm, preferably -42 to -45 ppm, T1 in the range of -46 to -54 ppm, preferably -48 to -52 ppm, T2 in the range of -54 to -60 ppm, preferably -56 to -58 ppm, and T3 in the range of -60 to -70 ppm, preferably -62 to -68 ppm. The negative value in the notation indicates that the resonance magnetic field

has a difference on a higher magnetic field side than the reference line. The width of the reference line depends on the strength of the magnetic field of the NMR instrument used in measurement. The aforementioned preferred range of resonance line is the value obtained from an example where a magnetic field of 11.75 Tesla (T) is applied. The magnetic field which can be used in the NMR instrument is in a range of 5 to 20 T, preferably 8 to 15 T, and more preferably 10 to 13 T. If the magnetic field is less than 5 T, measurement may be difficult because the S/N ratio becomes lower. If the magnetic field exceeds 20 T, measurement may be difficult because the resonance instrument becomes large sized. As a matter of course, the skilled artisan will analogize the strength of magnetic field, the width of resonance line, and the intensity of signals from the information set forth above.

Preferably, the signal intensity of T3 obtained from the $^{29}$Si NMR spectroscopy measured under the conditions set forth above, satisfies the value expressed by the following equation (2).

$$\int T3/\Sigma T = \int T3/(\int T3+\int T2+\int T1+\int T0) > 0.5 \quad \text{equation (2)}$$

Herein $\Sigma T$ is an integrated value of $^{29}$Si NMR signals assigned to trifunctional polysiloxane (T unit), and $\int T3$ is an integrated value of $^{29}$Si NMR signals assigned to (T3). When $\int T3/\Sigma T$ is at least 0.5, at least 50% of the silane compound having formula (I) has been condensed to such an extent to leave no room for further condensation, and accordingly, microparticles on their surface have a high hydrophobicity and are highly compatible with acrylic resins. A $\int T3/\Sigma T$ value of less than 0.5 indicates that silanol which is still condensable is present on surfaces of microparticles, leading to the problem that when microparticles are mixed with an acrylic resin to form a coating composition, the remaining silanol may allow agglomeration of microparticles to eventually cause whitening. As used herein, the integrated value refers to a quadrature problem when signal intensity is plotted relative to parts per million (ppm). For the quadrature, a threshold value is preferably set by an S/N ratio at a specific standard. The S/N ratio is at least 5, preferably at least 10, and more preferably at least 20. A S/N ratio of less than 5 may be unfavorable because the base line becomes thick and the accuracy of integration is worsened. The integrated value may be determined by the Simpson method using a computer, or by cutting a printed medium having a uniform plane density representative of spectrum to the spectral profile, and measuring its weight.

<u>(2) Photopolymerizable monomer and/or oligomer</u>

The photopolymerizable monomer which can be used herein is preferably selected from (meth)acrylic acids and esters of (meth)acrylic acids and (polyhydric) alcohols.

Examples of the esters of (meth)acrylic acids and (polyhydric) alcohols include

monoesters such as methyl methacrylate (abbr. MMA), methyl acrylate (abbr. MA), ethyl methacrylate, ethyl acrylate, hydroxyethyl acrylate (abbr. HEA), hydroxyethyl methacrylate (abbr. HEMA), hydroxypropyl acrylate, 4-hydroxybutyl acrylate, isobutyl acrylate, tert-butyl acrylate, n-octyl acrylate, isooctyl acrylate, isononyl acrylate, lauryl acrylate, stearyl acrylate, isostearyl acrylate, isonorbornyl acrylate, tetrahydrofurfuryl acrylate, methoxyethyl acrylate, methoxypolyethylene glycol acrylate, (2-methyl-2-ethyl-1,3-dioxolan-4-yl) acrylate, [{cyclohexanespiro-2-(1,3-dioxolan-4-yl)}methyl] acrylate, {(3-ethyloxetan-3-yl)methyl} acrylate, etc.;

diesters such as ethylene glycol diacrylate, propylene glycol diacrylate, butanediol diacrylate, pentanediol diacrylate, hexanediol diacrylate, heptanediol diacrylate, octanediol diacrylate, nonanediol diacrylate, decanediol diacrylate, glycerol 1,2-diacrylate, glycerol 1,3-diacrylate, pentaerythritol diacrylate, 2-hydroxy-3-acryloyloxypropyl methacrylate, tricyclodecane dimethanol diacrylate, dipropylene glycol diacrylate, and tripropylene glycol diacrylate;

polyfunctional esters such as glycerol triacrylate, trimethylolpropane triacrylate, pentaerythritol triacrylate, dipentaerythrytol triacrylate, ethoxylated isocyanuric acid triacrylate, ethoxylated glycerol triacrylate, ethoxylated trimethylolpropane triacrylate, pentaerythritol tetraacrylate, dipentaerythritol hexaacrylate, ditrimethylolpropane tetraacrylate, ethoxylated pentaerythritol tetraacrylate, trimethylolpropane trimethacrylate, trispentaerythritol octaacrylate, octa(3-acryloxypropylsilsesquioxane), 3-acryloxypropylsilsesquioxane oligomer, and acryloxypropylsilsesquioxane oligomers which may be substituted with a polydimethylsiloxane chain and/or perfluoro(oxy)alkyl chain.

The monoester may preferably be used in an amount of 0 to 70% by weight, more preferably 0 to 60% by weight, and even more preferably 0 to 50% by weight, based on the total weight of esters. The diester may preferably be used in an amount of 1 to 30% by weight, more preferably 2 to 25% by weight, and even more preferably 5 to 20% by weight, based on the total weight of esters. The polyfunctional ester may preferably be used in an amount of 50 to 100% by weight, more preferably 50 to 90% by weight, and even more preferably 50 to 80% by weight, based on the total weight of esters. The monoester is optional, but important from the aspect of solventless coating compositions and may be used instead of the solvent. If the content of monoester exceeds 70 wt%, the coating may become vulnerable. If the content of diester is less than 1 wt%, the coating may be less flexible. If the content of diester exceeds 30 wt%,

the coating may be less mar resistant. The polyfunctional ester is essential, and if its content is less than 50 wt%, the hardness of the coating may be insufficient.

Where polyfunctional esters such as 3-acryloxypropyl silsesquioxane oligomers and acryloxypropyl silsesquioxane oligomers which may be substituted with polydimethylsiloxane chain and/or perfluoro(oxy)alkyl chain are used as the photopolymerizable monomer, reference may be made to the well-known procedure (JP 4868135). For example, the ester may be synthesized via hydrolytic condensation of a mixture of ($\alpha$) a compound having any one of the general formulae (1) to (4), ($\beta$) alcohol, ($\gamma$) basic catalyst, and deionized water.

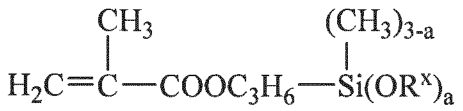
(1)

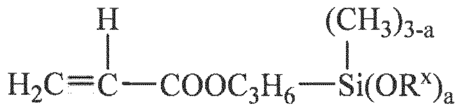
(2)

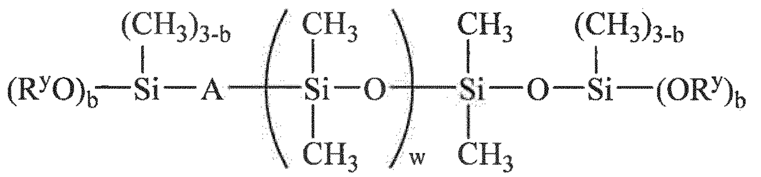
(3)

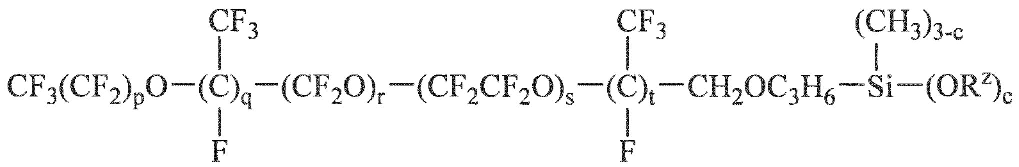
(4)

Herein $R^x$ is $C_1$-$C_4$ alkyl or acetyl; a, b and c each are an integer of 1 to 3; $R^y$ is hydrogen, methyl or ethyl; $R^z$ is $C_1$-$C_4$ alkyl or acetyl; A is oxygen or ethylene; w is an integer of 5 to 100, p is an integer of 0 to 10, q and t are each independently an integer of 1 to 5, r is an integer of 1 to 5, and s is an integer of 0 to 5.

With respect to compound group ($\alpha$), the total amount of compounds (1) and (2) is 10 to 100 mol%, preferably 20 to 100 mol%, and more preferably 30 to 100 mol% based on the overall weight of compounds in group ($\alpha$). If the total amount is less than 10 mol%, which indicates a lower proportion of reactive groups, the hardness of the coating may be insufficient. The amount of compound (3) is 0 to 20 mol%, preferably 0.5 to 10 mol%, and more preferably 1 to 5 mol% based on the overall weight of compounds in group ($\alpha$). If the amount of compound (3) exceeds 20 mol%, it may cause cissing to the coating, which is unfavorable in some applications. The amount of compound (4) is 0 to 30 mol%, preferably 2 to 20 mol%, and more preferably 4 to 15 mol% based on the overall weight of compounds in group ($\alpha$). If the amount of compound (4) exceeds 30 mol%, undesired results may occur because some compounds are less compatible with other acrylic monomers.

Examples of the alcohol ($\beta$) include methanol, ethanol, 1-propanol, 2-propanol, 1-butanol, 2-butanol, and propylene glycol monomethyl ether (PGM). The alcohol is preferably used in an amount of 10 to 500% by weight based on the weight of compounds in group ($\alpha$). Less than 10 wt% of the alcohol may fail to improve compatibility whereas more than 500 wt% may raise a problem of material efficiency.

Examples of the basic catalyst ($\gamma$) include basic compounds such as lithium hydroxide, sodium hydroxide, potassium hydroxide, sodium methylate, sodium propionate, potassium propionate, sodium acetate, potassium acetate, sodium formate, potassium formate, trimethylbenzylammonium hydroxide, tetramethylammonium hydroxide, tetramethylammonium acetate, n-hexylamine, tributylamine, diazabicycloundecene (DBU), and dicyandiamide; metal-containing compounds such as tetraisopropyl titanate, tetrabutyl titanate, titanium acetylacetonate, aluminum triisobutoxide, aluminum triisopropoxide, tris(acetylacetonato)aluminum, diisopropoxy(ethyl acetoacetate)aluminum, aluminum perchlorate, aluminum chloride, cobalt octylate, acetylacetonatocobalt, acetylacetonatoiron, acetylacetonatotin, dibutyltin octylate, and dibutyltin laurate; and acidic compounds such as p-toluenesulfonic acid and trichloroacetic acid. Inter alia, sodium propionate, sodium acetate, sodium formate, trimethylbenzylammonium hydroxide, tetramethylammonium hydroxide, tris(acetylacetonato)aluminum, and diisopropoxy(ethyl acetoacetate)aluminum are preferred. The basic catalyst

(γ) is preferably used in an amount of 0.1 to 20% by weight based on the weight of compounds in group (α). Less than 0.1 wt% of the catalyst may be insufficient for reaction efficiency whereas more than 20 wt% may bring a higher degree of condensation.

Deionized water is preferably used in an amount of 10 to 500 mol% of the stoichiometry necessary for hydrolytic condensation of compounds in group (α). Less than 10 mol% of water may be insufficient for reaction efficiency whereas more than 500 mol% may bring a higher degree of condensation.

The oligomer thus obtained preferably has a weight average molecular weight (Mw) of up to 5,000, more preferably 1,500 to 4,000, as measured versus polystyrene standards by gel permeation chromatography (GPC). An oligomer with a Mw of less than 1,500, which indicates short condensation, may lack storage stability, contain unreacted dimethylsiloxane, and cause cissing or defects on the coating surface. An oligomer with a Mw of more than 5,000 may have too high a viscosity to handle.

(3) Photoinitiator

Curing catalysts used herein may be those commonly used in acrylic coating compositions. Preferably photopolymerization initiators are used. Suitable photopolymerization initiators include alkylphenones such as 2,2-dimethoxy-1,2-diphenylethan-1-one, 1-hydroxycyclohexyl phenyl ketone, 2-hydroxy-2-methyl-1-phenylpropan-1-one, 1-[4-(2-hydroxyethoxy)-phenyl]-2-hydroxy-2-methyl-1-propan-1-one, and methyl phenylglyoxylate; aminoalkylphenones such as 2-methyl-1-(4-methylthiophenyl)-2-morpholinopropan-1-one, 2-benzyl-2-dimethylamino-1-(4-morpholinophenyl)-butanone-1, and 2-(dimethylamino)-2-[(4-methylphenyl)methyl]-1-[4-(4-morpholinyl)phenyl]-1-butanone; and phosphine oxides such as 2,4,6-trimethylbenzoyldiphenylphosphine oxide and bis(2,4,6-trimethylbenzoyl)phenylphosphine oxide.

Besides the photo-initiators, condensation catalysts are also useful as the curing catalyst. The condensation catalysts are effectively used when siloxane base acrylates such as octa(3-acryloxypropylsilsesquioxane) and 3-acryloxypropylsilsesquioxane oligomers are used as the polyfunctional ester. Curing catalysts commonly used in silicone coating compositions are useful. Specifically curing catalysts capable of promoting condensation reaction of condensable groups such as silanol and alkoxy groups are useful. Examples include basic compounds such as lithium hydroxide, sodium hydroxide, potassium hydroxide, sodium methylate, sodium propionate, potassium propionate, sodium acetate, potassium acetate, sodium formate, potassium formate, trimethylbenzylammonium hydroxide, tetramethylammonium hydroxide, tetramethylammonium acetate, n-hexylamine, tributylamine, diazabicycloundecene (DBU), and dicyandiamide; metal-containing compounds such as tetraisopropyl titanate, tetrabutyl titanate, titanium acetylacetonate, aluminum triisobutoxide, aluminum triisopropoxide, tris(acetylacetonato)aluminum, diisopropoxy(ethyl acetoacetate)aluminum, aluminum perchlorate, aluminum chloride, cobalt octylate, acetylacetonatocobalt, acetylacetonatoiron, acetylacetonatotin, dibutyltin octylate, and dibutyltin laurate; and acidic compounds such as p-toluenesulfonic acid and trichloroacetic acid. Inter alia, sodium propionate, sodium acetate, sodium formate, trimethylbenzylammonium hydroxide, tetramethylammonium hydroxide, tris(acetylacetonato)aluminum, and diisopropoxy(ethyl acetoacetate)aluminum are preferred.

Another useful curing catalyst is such that the coating composition loaded with this catalyst becomes shelf stable while remaining curable and crack resistant. It is a compound containing no aromatic in the molecule, represented by the general formula (V).

$$[(R^9)(R^{10})(R^{11})(R^{12})M]^+ \cdot X^- \qquad (V)$$

Herein $R^9$, $R^{10}$, $R^{11}$ and $R^{12}$ are each independently a $C_1$-$C_{18}$ alkyl group which may be substituted with halogen, each of $R^9$, $R^{10}$, $R^{11}$ and $R^{12}$ has a Taft-Dubois steric substituent constant Es, the total of constants Es of $R^9$, $R^{10}$, $R^{11}$ and $R^{12}$ is equal to -0.5 or more negative, M is an ammonium or phosphonium cation, and $X^-$ is a halide anion, hydroxide anion or $C_1$-$C_4$ carboxylate anion.

Taft-Dubois steric substituent constant Es is a rate of esterification reaction of a substituted carboxylic acid under acidic conditions relative to methyl group $CH_3$ and represented by the equation:

$$Es = \log(k/k0)$$

wherein k is a rate of acidic esterification reaction of a substituted carboxylic acid under specific conditions and k0 is a rate of acidic esterification reaction of methyl-substituted carboxylic acid under the same conditions. See J. Org. Chem., 45, 1164 (1980) and J. Org. Chem., 64, 7707 (1999).

In general, Taft-Dubois steric substituent constant Es is an index representing the steric bulkiness of a substituent. For example, the value of constant Es is 0.00 for methyl, -0.08 for ethyl, -0.31 for n-propyl, and -0.31 for n-butyl,

indicating that the lower (or more negative) the Es, the more sterically bulky is the substituent.

In formula (V), the total of constants Es of $R^9$, $R^{10}$, $R^{11}$ and $R^{12}$ should be equal to or more negative than -0.5. If the total of constants Es is above -0.5, a coating composition becomes low in shelf stability and forms a coat which can be cracked or whitened in a water-resistant test and loses adhesion, especially water-resistant adhesion and boiling adhesion. In the event the total of constants Es is above -0.5, for example, $R^9$, $R^{10}$, $R^{11}$ and $R^{12}$ are all methyl, a corresponding catalyst of formula (V) becomes higher in catalytic activity, but a coating composition comprising the same tends to lose shelf stability and a coat thereof becomes so hygroscopic as to develop defects in a water-resistant test. The total of constants Es of $R^9$, $R^{10}$, $R^{11}$ and $R^{12}$ is preferably not lower than -3.2, and more preferably not lower than -2.8.

In the above formula, $R^9$, $R^{10}$, $R^{11}$ and $R^{12}$ are alkyl groups of 1 to 18 carbon atoms, preferably 1 to 12 carbon atoms, which may be substituted with halogen, for example, alkyl groups such as methyl, ethyl, propyl, butyl, pentyl, hexyl, heptyl, and octyl; cycloalkyl groups such as cyclopentyl and cyclohexyl; and halo-alkyl groups such as chloromethyl, γ-chloropropyl and 3,3,3-trifluoropropyl.

M is an ammonium or phosphonium cation. X- is a halide anion, hydroxide anion or $C_1$-$C_4$ carboxylate anion, and preferably a hydroxide anion or acetate anion.

Illustrative examples of the curing catalyst having formula (V) include, but are not limited to, hydroxides such as tetra-n-propylammonium hydroxide, tetra-n-butylammonium hydroxide, tetra-n-pentylammonium hydroxide, tetra-n-hexylammonium hydroxide, tetracyclohexylammonium hydroxide, tetrakis(trifluoromethyl)ammonium hydroxide, trimethylcyclohexylammonium hydroxide, trimethyl(trifluoromethyl)ammonium hydroxide, trimethyl-tert-butylammonium hydroxide, tetra-n-propylphosphonium hydroxide, tetra-n-butylphosphonium hydroxide, tetra-n-pentylphosphonium hydroxide, tetra-n-hexylphosphonium hydroxide, tetracyclohexylphosphonium hydroxide, tetrakis(trifluoromethyl)phosphonium hydroxide, trimethylcyclohexylphosphonium hydroxide, trimethyl(trifluoromethyl)phosphonium hydroxide, and trimethyl-tert-butylphosphonium hydroxide; salts of the foregoing hydroxides with halogenic acids and with $C_1$-$C_4$ carboxylic acids. Inter alia, tetrapropylammonium hydroxide, tetrapropylammonium acetate, tetrabutylammonium hydroxide, tetrabutylammonium acetate, tetrabutylphosphonium hydroxide and tetrabutylphosphonium acetate are preferred. These may be used alone or in admixture of two or more, or in combination with any of the aforementioned well-known curing catalysts.

<u>(4) Other component(s)</u>

If desired, suitable additives may be added to the photocurable coating composition insofar as they do not adversely affect the invention. Suitable additives include solvents, pH adjustors, leveling agents, thickeners, pigments, dyes, metal oxide microparticles, metal powder, antioxidants, UV absorbers, UV stabilizers, heat ray reflecting/absorbing agents, flexibilizers, antistatic agents, anti-staining agents, and water repellents. Exemplary solvents include alcohols such as methanol, ethanol, isopropyl alcohol, n-butanol, isobutanol, tert-butanol, and diacetone alcohol; ketones such as methyl propyl ketone, diethyl ketone, methyl isobutyl ketone, cyclohexanone, and diacetone alcohol; ethers such as dipropyl ether, dibutyl ether, anisole, dioxane, ethylene glycol monoethyl ether, ethylene glycol monobutyl ether, propylene glycol monomethyl ether (PGM), and propylene glycol monomethyl ether acetate (PGMEA); and esters such as ethyl acetate, propyl acetate, butyl acetate, and cyclohexyl acetate. The solvents may be used alone or in admixture. Suitable leveling agents used herein include KP-341 from Shin-Etsu Chemical Co., Ltd. and BYK®-180 and BYK®-190 from BYK Chemie. Suitable UV absorbers used herein include organic compounds derived from benzophenone, benzotriazole and triazine and modified with silyl and/or acrylic groups.

The photocurable coating composition may be obtained by mixing selected amounts of components (1) to (3) and other component (4) in a standard manner. Component (1), surface-treated titanium oxide as solids may be used e.g. in an amount of 3 to 40% by weight, preferably 3 to 20% by weight, and more preferably 4 to 15% by weight based on the total solids of the coating composition. Component (2), photopolymerizable monomer and/or oligomer may be used e.g. in an amount of 1 to 99% by weight, preferably 10 to 90% by weight, and more preferably 15 to 85% by weight based on the total solids of the coating composition. Component (3), photoinitiator may be used e.g. in an amount of 0.01 to 10% by weight, preferably 0.01 to 8% by weight, and more preferably 0.01 to 5% by weight based on the total solids of the coating composition.

While the amounts of components (1) to (3) are calculated as solids, a mixture of components (1) to (3) may be diluted with a solvent to a solids concentration of about 1 to 70% by weight. As to the solvent in the final composition, the solvent originally contained in component (1) as dispersing medium may be resultantly present admixed in the final composition, or a new solvent may be intentionally added after mixing. It is noted that the amount of the curing catalyst or photoinitiator added is preferably 0.05 to 20% by weight. As the other component (4), any of the above-exemplified compounds may be dissolved in the solvent prior to addition and used in an amount of up to 20% by weight.

Laminate

The coating composition thus formulated may be applied to at least one surface of a substrate directly or via another layer or layers. It is then cured to yield a coated article or laminate.

The coating composition may be applied to the substrate by any ordinary coating techniques. Suitable coating techniques include brush coating, spray coating, dipping, flow coating, roll coating, curtain coating, spin coating, and knife coating.

The substrate used herein is not particularly limited and includes molded plastics, wood items, ceramics, glass, quartz, metals, and composites thereof. Of these, plastic materials or organic resin substrates are preferred. Examples include polycarbonate, polystyrene, acrylic resins, modified acrylic resins, urethane resins, thiourethane resins, polycondensates of halogenated bisphenol A and ethylene glycol, acrylic urethane resins, halogenated aryl-containing acrylic resins, and sulfur-containing resins. The foregoing resin substrates which have been surface treated, specifically by conversion treatment, corona discharge treatment, plasma treatment, acid or alkaline treatment are also useful. Also included are laminated substrates comprising a resin substrate and a surface layer formed thereon from a resin of different type from the substrate. Exemplary laminated substrates include those consisting of a polycarbonate resin substrate and a surface layer of acrylic resin or urethane resin which are prepared by co-extrusion or lamination technique, and those consisting of a polyester resin substrate and a surface layer of acrylic resin formed thereon.

After the coating composition is applied, the coating is cured, preferably by UV exposure. The curing temperature and UV dose are not particularly limited although the coating is preferably heated at a temperature below the heat resistant temperature of the substrate. Preferably the coating is heated at a temperature of 50 to 150°C, more preferably 80 to 135°C for volatilizing off the solvent before the coating is exposed to UV in a dose of 300 to 2,000 mJ/cm$^2$, more preferably 500 to 1,800 mJ/cm$^2$. The drying step (of volatilizing off the solvent) may preferably take a time of 3 to 10 minutes. A drying time of less than 3 minutes may lead to poor adhesion whereas a drying time of more than 10 minutes may result in a coating with an orange peel surface. Although the temperature and UV dose may be independently selected, a combination of a preferred temperature and a preferred UV dose is recommended. Specifically a temperature of 80°C and a dose of 600 mJ/cm$^2$ are preferred. Temperatures below 50°C are undesirable in most cases because the solvent will volatilize insufficiently and the coating may become voided or rugged. Temperatures above 150°C are undesirable in most cases because the initiator can be pyrolyzed to trigger unexpected reactions. Doses below 300 mJ/cm$^2$ are undesirable in most cases because of under-cure. Doses beyond 2,000 mJ/cm$^2$ are undesirable in most cases because of cracking and non-uniform progress of cure.

The thickness of the cured film is not particularly limited and may be selected as appropriate for a particular application. The cured film preferably has a thickness of 0.1 to 50 μm, and more preferably in the range of 1 to 20 μm for ensuring that the cured film has hardness, mar resistance, long-term stable adhesion and crack resistance. The coating thickness may be properly adjusted by tailoring the coating technique.

The coating composition of the invention is characterized by visible light transmittance in coating form. An index of visible light transmittance is the haze of a film. In general, the haze increases as the film becomes thicker. The film having a thickness of up to 5 μm preferably meets a haze of up to 2.0, more preferably up to 1.5, and even more preferably up to 1.0. The haze is as measured by a haze meter NDH2000 (Nippon Denshoku Industries Co., Ltd.).

The coating composition is also characterized by mar resistance in coating form. An index of mar resistance is a delta haze value (ΔHz) in the Taber abrasion test. Specifically, a ΔHz value is determined according to ASTM D1044 by mounting a Taber abrasion tester with abrasion wheels SC-10F, measuring the haze after 500 turns under a load of 500 g, and calculating a difference (ΔHz) between haze values before and after the test. The film having a thickness of up to 5 μm preferably has ΔHz of up to 15, more preferably up to 13, and even more preferably up to 10.

While the cured coating of the coating composition has improved mar resistance as mentioned just above, an inorganic evaporated film may be deposited on the cured coating in order to gain a further improvement in mar resistance. The inorganic evaporated film is not particularly limited as long as it is formed by a dry film deposition method. Included are films based on at least one metal or oxide, nitride or sulfide thereof, the metal being selected from the group consisting of Si, Ti, Zn, Al, Ga, In, Ce, Bi, Sb, B, Zr, Sn and Ta. Also included are diamond-like carbon films having a high hardness and insulating properties. The method for depositing an inorganic evaporated film is not particularly limited as long as it is a dry film deposition method. Suitable dry film deposition methods include physical gas phase growth methods such as resistance heating evaporation, electron beam evaporation, molecular beam epitaxy, ion beam deposition, ion plating, and sputtering, and chemical vapor deposition (CVD) methods such as thermal CVD, plasma CVD, photo CVD, epitaxial CVD, atomic layer CVD, and cat-CVD. Preferably the inorganic evaporated film has a thickness of 0.1 to 10 μm.

The coating composition is further characterized by weather resistance in coating form. An index of weather resistance is given by a weathering test to see whether or not a coating is kept intact in outer appearance, specifically whether or not a coating is cracked. To examine the development of cracks in a coating, the weathering test is carried out by using EYE Super UV tester W-151 (Iwasaki Electric Co., Ltd.), and irradiating UV light having an intensity of $1\times10^3$ W/m$^2$ at a temperature of 60°C and a relative humidity (RH) of 50%, and determining an irradiation time until

cracks develop in the coating. For example, when UV radiation having an intensity of $1\times10^3$ $W/m^2$ is irradiated for 1 hour, the accumulative energy quantity is 1 $kWh/m^2$, which is equal to 3.6 megajoule ($MJ/m^2$) according to the conversion rule of derived units. The cured film or coated article within the scope of the invention undergoes neither cracking nor whitening nor yellowing and maintains aesthetic appearance even after exposure in an accumulative UV energy quantity of 300 $MJ/m^2$.

In the weathering test, any environment of test conditions may be selected. An accumulative UV energy quantity of 300 $MJ/m^2$ corresponds to outdoor exposure over about 2 years. The correlation of test conditions to outdoor exposure may be readily estimated. For example, an outdoor UV illuminance is $1\times10^1$ $W/m^2$, when measured at noon on fine Vernal Equinox Day at Matsuida, Annaka City, Gunma Pref., Japan, using a UV illuminometer (EYE UV illuminometer UVP365-1 by Iwasaki Electric Co., Ltd.). Assume that the annual average daily sunshine time is 12 hours, the accumulative illuminance is 12 (h/day) $\times$ 365 (day/year) $\times$ 2 (year) $\times$ 10 ($W/m^2$) = 88 ($kWh/m^2$) $\cong$ 300 ($MJ/m^2$). When the facts that the outdoor environment depends on the latitude and weather, and the weathering test uses an artificial environment are taken into account, it is reasonable that an approximation of 300 $MJ/m^2$ corresponds to outdoor exposure over 2 years. The test conditions may be changed depending on a particular environment where the cured film is used.

In the weathering test, the coated article may be examined for a degree of degradation by taking out the article in the course of UV exposure and observing the outer appearance. One factor of appearance change is cracks, which may be evaluated by visual or microscopic observation. The microscope which can be used to this end is, for example, laser scanning microscope Model VK-8710 by Keyence Corp., but not limited thereto.

Another factor of appearance change is whitening, which may be determined in terms of haze of a coated article. The haze is as measured by a haze meter NDH2000 (Nippon Denshoku Industries Co., Ltd.), for example. Provided that Hz0 is an initial haze and Hz1 is a haze after the test, weathering haze is determined as $\Delta Hz'$ = Hz1 - Hz0. Preferably, the weathering haze $\Delta Hz'$ is less than 10, more preferably up to 8, and even more preferably up to 5. A sample with $\Delta Hz'$ of 10 or greater is undesirable because of an advance of whitening and worsening of transparency.

A further factor of appearance change is yellowing, which may be determined in terms of yellowness index of a coated article. The yellowness index is as measured by a chromaticity meter Z-300A (Nippon Denshoku Industries Co., Ltd.), for example. Provided that YI0 is an initial yellowness index and YI1 is a yellowness index after the test, a difference is determined as $\Delta YI'$ = YI1 - YI0. The yellowness index difference ($\Delta YI'$) is preferably up to 10, more preferably up to 8, and even more preferably up to 5, before and after exposure to UV radiation in a dose of 300 $MJ/m^2$. A sample with $\Delta YI'$ in excess of 10 is undesirable because of an advance of yellowing, degradation of the substrate, and worsening of aesthetic appearance.

The fourth advantage of the coating composition is good adhesion of a cured film to a substrate. An index of adhesion is evaluated by a cross-hatch adhesion test according to JIS K5400, specifically by scribing a coating with a razor along 6 longitudinal and 6 transverse lines at a spacing of 2 mm to define 25 square sections, tightly attaching adhesive tape (Cellotape® by Nichiban Co., Ltd.), and rapidly pulling back the adhesive tape at an angle of 90°. The number (X) of sections remaining intact (not peeled) is expressed as X/25. The closer to 25 the number (X) of remaining sections, the better the sample in adhesion. An index of water-proof adhesion is available when the film-bearing substrate is immersed in boiling water at 100°C for 2 hours prior to a cross-hatch adhesion test as above.

<u>Automotive headlamp cover</u>

The laminate of the invention is advantageously used as an automotive headlamp cover. Automotive headlamp covers must meet a certain level of transparency as required by the automotive safety standards. Also a high productivity is required because the covers are mass-scale manufacture items. Also mar resistance and yellowing resistance are requisite. Laminates embodying the invention have been found to meet all these requirements.

<u>EXAMPLE</u>

Examples and Comparative Examples are given below by way of illustration.

Reactants were purchased from chemical suppliers including Wako Pure Chemical Industries, Ltd. (abbreviated Wako) and Shin-Etsu Chemical Co., Ltd. (abbreviated Shin-Etsu).

<u>Synthesis Example 1</u>

Synthesis of surface-treated titanium oxide (T-1)

<u>Step (A)</u>

An inorganic oxide colloidal water dispersion containing core/shell microparticles each consisting of a core of

titanium-tin-manganese complex oxide and a shell of silicon oxide as dispersed phase in water as dispersing medium was prepared. First, a dispersion of titanium oxide microparticles serving as the core was prepared, followed by hydrolytic condensation of tetraethoxysilane, thereby yielding a colloidal dispersion of core/shell microparticles.

Specifically, 1.8 g of tin(IV) chloride pentahydrate (Wako) and 0.2 g of manganese(II) chloride tetrahydrate (Wako) were added to 66.0 g of 36 wt% titanium(IV) chloride aqueous solution (TC-36 by Ishihara Sangyo Kaisha, Ltd.). They were thoroughly mixed and diluted with 1,000 g of deionized water. To the metal salt aqueous solution mixture, 300 g of 5 wt% aqueous ammonia (Wako) was gradually added for neutralization and hydrolysis, yielding a precipitate of titanium hydroxide containing tin and manganese. This titanium hydroxide slurry was at pH 8. The precipitate of titanium hydroxide was deionized by repeating deionized water addition and decantation. To the precipitate of titanium hydroxide containing tin and manganese after deionization, 100 g of 30 wt% aqueous hydrogen peroxide (Wako) was gradually added, whereupon stirring was continued at 60°C for 3 hours for full reaction. Thereafter, pure water was added for concentration adjustment, yielding a semitransparent solution of tin and manganese-containing peroxotitanate (solid concentration 1 wt%). An autoclave of 500 mL volume (TEM-D500 by Taiatsu Techno Co., Ltd.) was charged with 350 mL of the peroxotitanate solution synthesized as above, which was subjected to hydrothermal reaction at 200°C and 1.5 MPa for 240 minutes. The reaction mixture in the autoclave was taken out via a sampling tube to a vessel in water bath at 25°C whereby the mixture was rapidly cooled to quench the reaction, obtaining a titanium oxide dispersion (i).

A separable flask equipped with a magnetic stirrer and thermometer was charged with 1,000 parts by weight of titanium oxide dispersion (i), 100 parts by weight of ethanol, and 2.0 parts by weight of ammonia at room temperature (25°C), followed by magnetic stirring. The separable flask was placed in an ice bath and cooled until the temperature of the contents reached 5°C. 18 parts by weight of tetraethoxysilane (KBE-04 by Shin-Etsu) was added to the separable flask, which was mounted in μReactor EX (Shikoku Instrumentation Co., Inc.) where microwave was applied at a frequency 2.45 GHz and a power 1,000 W for 1 minute while magnetic stirring was continued. The thermometer was monitored during the microwave heating step, confirming that the temperature of the contents reached 85°C. The mixture was filtered through qualitative filter (Advantec 2B), obtaining a dilute colloidal dispersion. By ultrafiltration, the dilute colloidal dispersion was concentrated to 10 wt%, yielding an inorganic oxide colloidal water dispersion (WT-1). A 1,000-mL separable flask equipped with a magnetic stirrer was charged with 200 g of colloidal dispersion (WT-1).

Step (B)

To the flask charged with dispersion (WT-1) in step (A), 200 g of isobutyl alcohol (Delta Chemicals Co., Ltd.) was fed. The aqueous titania sol and isobutyl alcohol were not fully compatible and formed two phases. Notably, isobutyl alcohol had a solubility in water at 20°C of 10 (g/100 g water).

Step (C)

The flask from step (B) was charged with 20 g of 3-acryloyloxypropyltrimethoxysilane (KBM-5103 by Shin-Etsu). It was observed that the silane dissolved mainly in the organic layer (isobutyl alcohol layer).

Step (D)

The flask from step (C) was placed in the cavity of a microwave oven, μReactor Ex (Shikoku Instrumentation Co., Inc.). While the magnetic stirrer was rotated at 700 rpm, microwave was applied for 5 minutes. By means of the program built in the oven, microwave irradiation was controlled so that the liquid temperature reached 82°C at maximum. At the end of microwave irradiation, the flask was allowed to stand at room temperature until the liquid temperature reached 40°C. The colloidal dispersion was in the suspended state.

Step (E)

To the flask from step (D), 300 g of propylene glycol monomethyl ether (Nippon Nyukazai Co., Ltd.) was added as organic solvent while stirring with the magnetic stirrer (700 rpm). At the end of organic solvent addition, the reaction solution looked uniform and transparent.

Step (F)

The contents of the flask from step (E) were transferred to a distillation flask, which was heated under a pressure of 760 mmHg for distillation. Distillation started when the flask internal temperature reached about 85°C. Distillation was continued until the distillate amounted to 500 g. At the end of distillation, the internal temperature was about 120°C. The flask contents were cooled to room temperature, whereupon a water concentration was 0.20% as analyzed by the Karl-Fischer method. The organotitania sol thus synthesized was measured for volume average 50% cumulative particle diameter by the dynamic light scattering method. The results of measurement are plotted in FIG. 1. Particles in the organotitania sol synthesized were observed (50,000×) under a TEM model HT-9000 (Hitachi High-Technologies Corp.). The photomicrograph is shown in FIG. 2.

Step (G)

The organotitania sol resulting from step (F), 200 g, was treated with 20 g of Molecular Sieve 4A (catalog No. 25958-08, Kanto Chemical Co., Ltd.) whereby the water concentration was reduced to 250 ppm. No agglomerates were found at this point. It was demonstrated that molecular sieve treatment was effective for reducing the water content which had not completely been removed in step (F).

Step (H)

Under a nitrogen stream, 200 g (solids 11 wt%) of the organotitania sol resulting from step (G) was reacted with 10 g of bis{(acryloyloxymethyl)dimethylsilyl}azane at 80°C for 8 hours. At the end of reaction, the reaction mixture was kept in contact with 10 g of cation exchange resin (Amberlite® 200CT(H)-A by Organo Co., Ltd.) to remove ammonia by-product. The mixture was filtered through qualitative filter (Advantec 2B), collecting surface-treated titanium oxide (T-1). Several droplets (ca. 0.2 mL) of 1M solution of trisacetylacetonatoiron(III) (Kanto Chemical Co., Ltd.) in hexadeuterioacetone (Cambridge Isotope Laboratories Inc.) were added to 10 mL of surface-treated titanium oxide (T-1), which was transferred to a NMR tube of PTFE with a diameter 10 mm and analyzed by $^{29}Si$ NMR spectroscopy. Analytical conditions included gated decoupling, a pulse sequence of 45° pulses and pulse interval 6 seconds, magnetic field strength 11.75 T, and repetition of 7,200 times. FIG. 3 shows the NMR spectrum. It is evident from FIG. 3 that at least 50% of T units (trifunctional polysiloxane) assume the T3 state.

Synthesis Example 2

Surface-treated titanium oxide (T-2) was obtained by the same procedure as in Synthesis Example 1 except that in step (H), 8 g of hexamethyldisilazane was used instead of 10 g of bis{(acryloyloxymethyl)dimethylsilyl}azane. Several droplets (ca. 0.2 mL) of 1M solution of trisacetylacetonatoiron(III) (Kanto Chemical Co., Ltd.) in hexadeuterioacetone (Cambridge Isotope Laboratories Inc.) and cyclooctamethyl-octasiloxane as internal reference were added to surface-treated titanium oxide (T-2), which was transferred to a NMR tube of PTFE with a diameter 10 mm and analyzed by $^{29}Si$ NMR spectroscopy. Analytical conditions included gated decoupling, a pulse sequence of 45° pulses and pulse interval 6 seconds, magnetic field strength 11.75 T, and repetition of 7,200 times. FIG. 4 shows the NMR spectrum. It is evident from FIG. 4 that at least 50% of T units (trifunctional polysiloxane) assume the T3 state.

Synthesis Example 3

Surface-treated titanium oxide (T-3) was obtained by the same procedure as in Synthesis Example 1 except that in step (H), 11 g of bis{(acryloyloxypropyl)dimethylsilyl}azane was used instead of 10 g of bis{(acryloyloxymethyl)dimethylsilyl}azane. Several droplets (ca. 0.2 mL) of 1M solution of trisacetylacetonatoiron(III) (Kanto Chemical Co., Ltd.) in hexadeuterioacetone (Cambridge Isotope Laboratories Inc.) were added to surface-treated titanium oxide (T-3), which was transferred to a NMR tube of PTFE with a diameter 10 mm and analyzed by $^{29}Si$ NMR spectroscopy. Analytical conditions included gated decoupling, a pulse sequence of 45° pulses and pulse interval 6 seconds, magnetic field strength 11.75 T, and repetition of 7,200 times. It is evident from the NMR spectrum that at least 50% of T units (trifunctional polysiloxane) assume the T3 state.

Comparative Synthesis Example 1

Surface-treated titanium oxide (T-4) was obtained by the same procedure as in Synthesis Example 1 except that step (H) was omitted. Several droplets (ca. 0.2 mL) of 1M solution of trisacetylacetonatoiron(III) (Kanto Chemical Co., Ltd.) in hexadeuterioacetone (Cambridge Isotope Laboratories Inc.) were added to surface-treated titanium oxide (T-4), which was transferred to a NMR tube of PTFE with a diameter 10 mm and analyzed by $^{29}Si$ NMR spectroscopy. Analytical conditions included gated decoupling, a pulse sequence of 45° pulses and pulse interval 6 seconds, magnetic field strength 11.75 T, and repetition of 7,200 times. FIG. 5 shows the NMR spectrum. It is evident from FIG. 5 that few (< 5%) of T units (trifunctional polysiloxane) assume the T3 state.

Synthesis Example 4

Synthesis of photopolymerizable monomer (Silicone A)

As the photopolymerizable monomer, commercially available monomers can be used in many cases. Acrylates having siloxane skeleton are also included in component (2) of the inventive composition. In this example, a siloxane base acrylate (designated Silicone A) was synthesized by the following procedure.

A mixture was obtained by combining 2,500 g of 3-acryloyloxypropyltrimethoxysilane (KBM-5103 by Shin-Etsu), 10 g of $\alpha,\omega$-bis(trimethoxysilylethyl)deca(dimethylsiloxane), 200 g of 3-{2,5-bis(trifluoromethyl)-2,4,4,5,7,7,8,8,9,9,9-undecafluoro-3,6-dioxanonyl}propyl(trimethoxy)silane, and 4,700 g of isopropyl alcohol. To the mixture were added 180 g of tetramethylammonium hydroxide (ELM-D by Mitsubishi Gas Chemical Co., Ltd.) and 1,000 g of deionized water. The mixture was aged at room temperature for 5 hours. 9,000 g of toluene was added to the mixture, which was stirred at room temperature for one hour. The solution was washed with 5,000 g of water and 500 g of sodium sulfate hydrate, and heated at 70°C and 5 mmHg to remove the volatile matter. The resulting silicone had a weight average molecular weight (Mw) of 2,100. It is noted that molecular weight was measured by using a gel permeation chromatograph (model HLC-8320 by Tosoh Corp.), feeding tetrahydrofuran (trade name Cica guaranteed grade by Kanto Chemical Co., Ltd.) as eluent, measuring the time taken until Silicone A was eluted from the fixed phase of a polystyrene filled column (trade name TSKgelG3000HXL by Tosoh Corp.), and comparing it with polystyrene standard samples (trade name PStQuick E and F by Tosoh Corp.).

Example 1

A 200-mL light-shielding brown plastic bottle was charged with 70 g of dipentaerythritol hexaacrylate (abbr. DPHA, trade name Miramer® M600 by Miwon Commercial Co., Ltd.), 13 g of 1,6-hexanediol diacrylate (abbr. HDDA, trade name A-HD-N by Shin-Nakamura Chemical Co., Ltd.), 1.5 g of photoinitiator 1 (trade name Irgacure® 754 by BASF), 1.5 g of photoinitiator 2 (trade name Lucirin® TPO by BASF), and 0.6 g of leveling agent (trade name KP-341 by Shin-Etsu). To the mixture, the surface-treated titanium oxide (T-1) synthesized in Synthesis Example 1 was added in an amount of 40 g calculated as dispersion having a solids content 11 wt%, or 4.4 g calculated as solids. PGM, 64.4 g, was added such that the solvents summed to 100 g. The mixture was agitated by shaking on a paint shaker at 200 rpm for 30 minutes, yielding a photocurable coating composition (P-1).

Example 2

A 200-mL light-shielding brown plastic bottle was charged with 70 g of dipentaerythritol hexaacrylate (abbr. DPHA, trade name Miramer® M600 by Miwon Commercial Co., Ltd.), 13 g of 1,6-hexanediol diacrylate (abbr. HDDA, trade name A-HD-N by Shin-Nakamura Chemical Co., Ltd.), 1.5 g of photoinitiator 1 (trade name Irgacure® 754 by BASF), 1.5 g of photoinitiator 2 (trade name Lucirin® TPO by BASF), 0.6 g of leveling agent (trade name KP-341 by Shin-Etsu), and 4.0 g of [2-{3-(2H-benzotriazol-2-yl)-4-hydroxyphenyl}ethyl] methacrylate (trade name RUVA-93 by Otsuka Chemical Co., Ltd.). To the mixture, the surface-treated titanium oxide (T-1) synthesized in Synthesis Example 1 was added in an amount of 40 g as dispersion having a solids content 11 wt%, or 4.4 g as solids. PGM, 64.4 g, was added such that the solvents summed to 100 g. The mixture was agitated by shaking on a paint shaker at 200 rpm for 30 minutes, yielding a photocurable coating composition (P-2).

Example 3

A 200-mL light-shielding brown plastic bottle was charged with 70 g of dipentaerythritol hexaacrylate (abbr. DPHA, trade name Miramer® M600 by Miwon Commercial Co., Ltd.), 13 g of 1,6-hexanediol diacrylate (abbr. HDDA, trade name A-HD-N by Shin-Nakamura Chemical Co., Ltd.), 1.5 g of photoinitiator 1 (trade name Irgacure® 754 by BASF), 1.5 g of photoinitiator 2 (trade name Lucirin® TPO by BASF), and 0.6 g of leveling agent (trade name KP-341 by Shin-Etsu). To the mixture, the surface-treated titanium oxide (T-2) synthesized in Synthesis Example 2 was added in an amount of 40 g as dispersion having a solids content 11 wt%, or 4.4 g as solids. PGM, 64.4 g, was added such that the solvents summed to 100 g. The mixture was agitated by shaking on a paint shaker at 200 rpm for 30 minutes, yielding a photocurable coating composition (P-3).

Example 4

A 200-mL light-shielding brown plastic bottle was charged with 70 g of dipentaerythritol hexaacrylate (abbr. DPHA, trade name Miramer® M600 by Miwon Commercial Co., Ltd.), 13 g of 1,6-hexanediol diacrylate (abbr. HDDA,

trade name A-HD-N by Shin-Nakamura Chemical Co., Ltd.), 1.5 g of photoinitiator 1 (trade name Irgacure® 754 by BASF), 1.5 g of photoinitiator 2 (trade name Lucirin® TPO by BASF), and 0.6 g of leveling agent (trade name KP-341 by Shin-Etsu). To the mixture, the surface-treated titanium oxide (T-3) synthesized in Synthesis Example 3 was added in an amount of 40 g as dispersion having a solids content 11 wt%, or 4.4 g as solids. PGM, 64.4 g, was added such that the solvents summed to 100 g. The mixture was agitated by shaking on a paint shaker at 200 rpm for 30 minutes, yielding a photocurable coating composition (P-4).

Example 5

A 200-mL light-shielding brown plastic bottle was charged with 70 g of dipentaerythritol hexaacrylate (abbr. DPHA, trade name Miramer® M600 by Miwon Commercial Co., Ltd.), 8 g of 1,6-hexanediol diacrylate (abbr. HDDA, trade name A-HD-N by Shin-Nakamura Chemical Co., Ltd.), 10 g of a dispersion of colloidal silica in hexanediol diacrylate (trade name Nanocryl® C140 by Nanoresin), 1.5 g of photoinitiator 1 (trade name Irgacure® 754 by BASF), 1.5 g of photoinitiator 2 (trade name Lucirin® TPO by BASF), and 0.6 g of leveling agent (trade name KP-341 by Shin-Etsu). To the mixture, the surface-treated titanium oxide (T-1) synthesized in Synthesis Example 1 was added in an amount of 40 g as dispersion having a solids content 11 wt%, or 4.4 g as solids. PGM, 64.4 g, was added such that the solvents summed to 100 g. The mixture was agitated by shaking on a paint shaker at 200 rpm for 30 minutes, yielding a photocurable coating composition (P-5).

Example 6

A 200-mL light-shielding brown plastic bottle was charged with 40 g of dipentaerythritol hexaacrylate (abbr. DPHA, trade name Miramer® M600 by Miwon Commercial Co., Ltd.), 40 g of Silicone A, i.e. siloxane-base acrylate synthesized in Synthesis Example 4, 6.0 g of photoinitiator 3 (trade name SB-PI703, 2-hydroxy-2-methoxyphenylpropanone by Shuang Bang Industrial Corp.), 6.0 g of photoinitiator 4 (trade name Micure CP4 by Miwon Commercial Co., Ltd.), 1.6 g of photoinitiator 5 (trade name Irgacure® 907 by BASF), and 0.6 g of leveling agent (trade name KP-341 by Shin-Etsu). To the mixture, the surface-treated titanium oxide (T-1) synthesized in Synthesis Example 1 was added in an amount of 40 g as dispersion having a solids content 11 wt%, or 4.4 g as solids. PGM, 64.4 g, was added such that the solvents summed to 100 g. The mixture was agitated by shaking on a paint shaker at 200 rpm for 30 minutes, yielding a photocurable coating composition (P-6).

Example 7

A 200-mL light-shielding brown plastic bottle was charged with 70 g of dipentaerythritol hexaacrylate (abbr. DPHA, trade name Miramer® M600 by Miwon Commercial Co., Ltd.), 13 g of 1,6-hexanediol diacrylate (abbr. HDDA, trade name A-HD-N by Shin-Nakamura Chemical Co., Ltd.), 1.5 g of photoinitiator 1 (trade name Irgacure® 754 by BASF), 1.5 g of photoinitiator 2 (trade name Lucirin® TPO by BASF), and 0.6 g of leveling agent (trade name KP-341 by Shin-Etsu). To the mixture, the surface-treated titanium oxide (T-1) synthesized in Synthesis Example 1 was added in an amount of 40 g as dispersion having a solids content 11 wt%, or 4.4 g as solids. To the mixture, 56.0 g of 2-methyl-2-ethyl-1,3-dioxolan-4-yl acrylate (trade name MEDOL-10 by Osaka Organic Chemical Industry, Ltd.) was added instead of the solvent. The mixture was agitated by shaking on a paint shaker at 200 rpm for 30 minutes, yielding a photocurable coating composition (P-7).

Comparative Example 1

A 200-mL light-shielding brown plastic bottle was charged with 70 g of dipentaerythritol hexaacrylate (abbr. DPHA, trade name Miramer® M600 by Miwon Commercial Co., Ltd.), 13 g of 1,6-hexanediol diacrylate (abbr. HDDA, trade name A-HD-N by Shin-Nakamura Chemical Co., Ltd.), 1.5 g of photoinitiator 1 (trade name Irgacure® 754 by BASF), 1.5 g of photoinitiator 2 (trade name Lucirin® TPO by BASF), and 0.6 g of leveling agent (trade name KP-341 by Shin-Etsu). To the mixture, the surface-treated titanium oxide (T-4) synthesized in Comparative Synthesis Example 1 was added in an amount of 40 g as dispersion having a solids content 11 wt%, or 4.4 g as solids. PGM, 64.4 g, was added such that the solvents summed to 100 g. The mixture was agitated by shaking on a paint shaker at 200 rpm for 30 minutes, yielding a photocurable coating composition (P-8).

Comparative Example 2

A 200-mL light-shielding brown plastic bottle was charged with 70 g of dipentaerythritol hexaacrylate (abbr. DPHA, trade name Miramer® M600 by Miwon Commercial Co., Ltd.), 13 g of 1,6-hexanediol diacrylate (abbr. HDDA,

trade name A-HD-N by Shin-Nakamura Chemical Co., Ltd.), 1.5 g of photoinitiator 1 (trade name Irgacure® 754 by BASF), 1.5 g of photoinitiator 2 (trade name Lucirin® TPO by BASF), 0.6 g of leveling agent (trade name KP-341 by Shin-Etsu), and 4.0 g of [2-{3-(2H-benzotriazol-2-yl)-4-hydroxyphenyl}ethyl] methacrylate (trade name RUVA-93 by Otsuka Chemical Co., Ltd.). To the mixture, 100.0 g of PGM was added. The mixture was agitated by shaking on a paint shaker at 200 rpm for 30 minutes, yielding a photocurable coating composition (P-9).

Comparative Example 3

A 200-mL light-shielding brown plastic bottle was charged with 40 g of dipentaerythritol hexaacrylate (abbr. DPHA, trade name Miramer® M600 by Miwon Commercial Co., Ltd.), 40 g of Silicone A, i.e. siloxane-base acrylate synthesized in Synthesis Example 4, 6.0 g of photoinitiator 3 (trade name SB-PI703, 2-hydroxy-2-methoxyphenylpropanone by Shuang Bang Industrial Corp.), 6.0 g of photoinitiator 4 (trade name Micure CP4 by Miwon Commercial Co., Ltd.), 1.6 g of photoinitiator 5 (trade name Irgacure® 907 by BASF), and 0.6 g of leveling agent (trade name KP-341 by Shin-Etsu). To the mixture, the surface-treated titanium oxide (T-4) synthesized in Comparative Synthesis Example 1 was added in an amount of 40 g as dispersion having a solids content 11 wt%, or 4.4 g as solids. PGM, 64.4 g, was added such that the solvents summed to 100 g. The mixture was agitated by shaking on a paint shaker at 200 rpm for 30 minutes, yielding a photocurable coating composition (P-10).

With respect to the photocurable coating compositions (P-1 to P-10) prepared in Examples 1 to 7 and Comparative Examples 1 to 3, the components used therein and their amounts are summarized in Table 1 wherein abbreviations have the following meaning.

Component (1)

T-1: surface-treated titanium oxide synthesized in Synthesis Example 1

T-2: surface-treated titanium oxide synthesized in Synthesis Example 2

T-3: surface-treated titanium oxide synthesized in Synthesis Example 3

T-4: surface-treated titanium oxide synthesized in Comparative Synthesis Example 1

Component (2)

DPHA: dipentaerythritol hexaacrylate

HDDA: hexanediol diacrylate

Silicone A: siloxane-base acrylate synthesized in Synthesis Example 4

MEDOL-10: 2-methyl-2-ethyl-1,3-dioxolan-4-yl acrylate by Osaka Organic Chemical Industry, Ltd.

Component (3)

I-754/I-907: Irgacure® 754 and Irgacure 907 by BASF

L-TPO: Lucirin® TPO by BASF

Micure CP4: hydroxycyclohexyl phenyl ketone by Miwon Commercial Co., Ltd.

SB-PI703: 2-hydroxy-2-methoxyphenylpropanone by Shuang Bang Industrial Corp.

Component (4)

| | |
|---|---|
| Solvent PGM: | propylene glycol monomethyl ether |
| Leveling agent KP-341: | by Shin-Etsu |
| Photostabilizer RUVA-93: | [2-{3-(2H-benzotriazol-2-yl)-4-hydroxyphenyl}ethyl] methacrylate by Otsuka Chemical Co., Ltd. |
| Silica sol C140: | dispersion of colloidal silica in hexanediol diacrylate commercially available as Nanocryl C140 from Nanoresin AG |

Table 1: Amounts (g) of components

| Component | Designation | Abbreviation | Example | | | | | | | Comparative Example | | |
|---|---|---|---|---|---|---|---|---|---|---|---|---|
| | | | 1 | 2 | 3 | 4 | 5 | 6 | 7 | 1 | 2 | 3 |
| (1) | Surface-treated titanium oxide | T-1 | 4.4 | 4.4 | 0.0 | 0.0 | 4.4 | 4.4 | 4.4 | 0.0 | 0.0 | 0.0 |
| | | T-2 | 0.0 | 0.0 | 4.4 | 0.0 | 0.0 | 0.0 | 0.0 | 0.0 | 0.0 | 0.0 |
| | | T-3 | 0.0 | 0.0 | 0.0 | 4.4 | 0.0 | 0.0 | 0.0 | 0.0 | 0.0 | 0.0 |
| | | T-4 | 0.0 | 0.0 | 0.0 | 0.0 | 0.0 | 0.0 | 0.0 | 4.4 | 0.0 | 4.4 |
| (2) | Photo-polymer-risable monomer | DPHA | 70.0 | 70.0 | 70.0 | 70.0 | 70.0 | 40.0 | 70.0 | 70.0 | 70.0 | 40.0 |
| | | HDDA | 13.0 | 13.0 | 13.0 | 13.0 | 8.0 | 0.0 | 13.0 | 13.0 | 13.0 | 0.0 |
| | | Silicone A | 0.0 | 0.0 | 0.0 | 0.0 | 0.0 | 40.0 | 0.0 | 0.0 | 0.0 | 40.0 |
| | | MEDOL-10 | 0.0 | 0.0 | 0.0 | 0.0 | 0.0 | 0.0 | 56.0 | 0.0 | 0.0 | 0.0 |
| (3) | Photoinitiator | I-754 | 1.5 | 1.5 | 1.5 | 1.5 | 1.5 | 0.0 | 1.5 | 1.5 | 1.5 | 0.0 |
| | | L-TPO | 1.5 | 1.5 | 1.5 | 1.5 | 1.5 | 0.0 | 1.5 | 1.5 | 1.5 | 0.0 |
| | | SB-PI703 | 0.0 | 0.0 | 0.0 | 0.0 | 0.0 | 6.0 | 0.0 | 0.0 | 0.0 | 6.0 |
| | | MicureCP4 | 0.0 | 0.0 | 0.0 | 0.0 | 0.0 | 6.0 | 0.0 | 0.0 | 0.0 | 6.0 |
| | | I-907 | 0.0 | 0.0 | 0.0 | 0.0 | 0.0 | 1.6 | 0.0 | 0.0 | 0.0 | 1.6 |
| (4) | Solvent | PGM | 100.0 | 100.0 | 100.0 | 100.0 | 100.0 | 100.0 | 44.0 | 100.0 | 100.0 | 100.0 |
| | Leveling agent | KP-341 | 0.6 | 0.6 | 0.6 | 0.6 | 0.6 | 0.6 | 0.6 | 0.6 | 0.6 | 0.6 |
| | Photo-stabiliser | RUVA-93 | 0.0 | 4.0 | 0.0 | 0.0 | 0.0 | 0.0 | 0.0 | 0.0 | 4.0 | 0.0 |
| | Silica sol | C140 | 0.0 | 0.0 | 0.0 | 0.0 | 10.0 | 0.0 | 0.0 | 0.0 | 0.0 | 0.0 |

Example 8

A laminate was prepared using photocurable coating composition (P-1) of Example 1. In a temperature/humidity chamber (25°C, RH50%), photocurable coating composition (P-1) was flow coated on one surface of a polycarbonate substrate of 5 mm thick (trade name ECK100UU by Sumitomo Bakelite Co., Ltd.). After flow coating, the coated substrate was held at an angle of ~80° for 5 minutes in the chamber for leveling the coating. After leveling, the substrate was placed in an oven at 80°C for 5 minutes for volatilizing off the solvent. Thereafter, the substrate was transferred to a conveyor type UV irradiation system in which the belt conveyor was set at a temperature of 80°C (ECS-401XN2 by Eye Graphics Co., Ltd.) where the coating was exposed to UV in a dose of 600 $mJ/cm^2$, yielding a laminate (L-8). The surface of laminate (L-8) was scan by a high-speed Fourier transform thin-film interferometer (F-20 by Filmetrics, Inc.), finding a film thickness of $5\times10^{-6}$ m. The same procedure was repeated aside from using a quartz substrate instead of the PC substrate, yielding a laminate (L-8'). The surface of laminate (L-8') was scan by the interferometer F-20, finding a film thickness of $5\times10^{-6}$ m. The laminate (L-8) was evaluated by haze measurement, the Taber abrasion test of ASTM D1044, adhesion test, boiling adhesion test, and weathering test. The laminate (L-8') was measured for UV/visible transmittance by spectrometry. The detailed conditions of the tests are summarized in Table 2 together with the test results.

Examples 9

As in Example 8, laminates (L-9) and (L-9') were prepared using photocurable coating composition (P-2) of Example 2. The laminate (L-9) was evaluated by haze measurement, Taber abrasion test, adhesion test, boiling adhesion test, and weathering test. The laminate (L-9') was measured for UV/visible transmittance. The test conditions are summarized in Table 2 together with the test results.

Example 10

As in Example 8, laminates (L-10) and (L-10') were prepared using photocurable coating composition (P-3) of Example 3. The laminate (L-10) was evaluated by haze measurement, Taber abrasion test, adhesion test, boiling adhesion test, and weathering test. The laminate (L-10') was measured for UV/visible transmittance. The test conditions are summarized in Table 2 together with the test results.

Example 11

As in Example 8, laminates (L-11) and (L-11') were prepared using photocurable coating composition (P-4) of Example 4. The laminate (L-11) was evaluated by haze measurement, Taber abrasion test, adhesion test, boiling adhesion test, and weathering test. The laminate (L-11') was measured for UV/visible transmittance. The test conditions are summarized in Table 2 together with the test results.

Example 12

As in Example 8, laminates (L-12) and (L-12') were prepared using photocurable coating composition (P-5) of Example 5. The laminate (L-12) was evaluated by haze measurement, Taber abrasion test, adhesion test, boiling adhesion test, and weathering test. The laminate (L-12') was measured for UV/visible transmittance. The test conditions are summarized in Table 2 together with the test results.

Example 13

As in Example 8, laminates (L-13) and (L-13') were prepared using photocurable coating composition (P-6) of Example 6. The laminate (L-13) was evaluated by haze measurement, Taber abrasion test, adhesion test, boiling adhesion test, and weathering test. The laminate (L-13') was measured for UV/visible transmittance. The test conditions are summarized in Table 2 together with the test results.

Example 14

As in Example 8, laminates (L-14) and (L-14') were prepared using photocurable coating composition (P-7) of Example 7. The laminate (L-14) was evaluated by haze measurement, Taber abrasion test, adhesion test, boiling adhesion test, and weathering test. The laminate (L-14') was measured for UV/visible transmittance. The test conditions are summarized in Table 2 together with the test results.

Comparative Example 4

As in Example 8, laminates (L-15) and (L-15') were prepared using photocurable coating composition (P-8) of Comparative Example 1. The laminate (L-15) was evaluated by haze measurement, Taber abrasion test, adhesion test, boiling adhesion test, and weathering test. The laminate (L-15') was measured for UV/visible transmittance. The test conditions are summarized in Table 2 together with the test results.

Comparative Example 5

As in Example 8, laminates (L-16) and (L-16') were prepared using photocurable coating composition (P-9) of Comparative Example 2. The laminate (L-16) was evaluated by haze measurement, Taber abrasion test, adhesion test, boiling adhesion test, and weathering test. The laminate (L-16') was measured for UV/visible transmittance. The test conditions are summarized in Table 2 together with the test results.

Comparative Example 6

As in Example 8, laminates (L-17) and (L-17') were prepared using photocurable coating composition (P-10) of Comparative Example 3. The laminate (L-17) was evaluated by haze measurement, Taber abrasion test, adhesion test, boiling adhesion test, and weathering test. The laminate (L-17') was measured for UV/visible transmittance. The test conditions are summarized in Table 2 together with the test results.

Test 1: Haze

The haze of laminates (L-8 to L-17) was measured by a haze meter NDH2000 (Nippon Denshoku Industries Co., Ltd.). Those samples having a haze value of up to 1, up to 2, and more than 2 are rated excellent (◎), good (○) and reject (×), respectively.

Test 2: Mar resistance

A haze difference before and after the abrasion test was used as an index of mar resistance of laminates (L-8 to L-17). The haze of a coating was analyzed according to ASTM D1044 by mounting a Taber abrasion tester with wheels CS-10F, abrading the sample over 500 turns under a load of 500 g, measuring haze by a haze meter NDH5000SP (Nippon Denshoku Industries Co., Ltd.), and calculating a haze difference (ΔHz) before and after the test. Those samples giving a haze difference (ΔHz) of up to 5, up to 10, and more than 10 are rated excellent (◎), good (○) and reject (×), respectively.

Test 3: Adhesion

The adhesion of laminates (L-8 to L-17) was analyzed by a cross-hatch adhesion test according to JIS K5400, specifically by scribing the sample with a razor along 6 longitudinal and 6 transverse lines at a spacing of 2 mm to define 25 square sections, tightly attaching adhesive tape (Cellotape® by Nichiban Co., Ltd.) thereto, rapidly pulling back the adhesive tape at an angle of 90°, and counting the number (X) of coating sections kept unpeeled. The result is expressed as X/25. Those samples having a X/25 value wherein X=25 are rated good (○) whereas those samples having a X/25 value wherein X < 25 are rated reject (×).

Test 4: Broiling adhesion

The sample (laminates (L-8 to L-17)) was immersed in boiling water at 100°C for 2 hours, after which it was examined for adhesion by the adhesion test (JIS K5400) as above. Those samples having a X/25 value wherein X=25 are rated good (○) whereas those samples having a X/25 value wherein X < 25 are rated reject (×).

Test 5: Weathering resistance

Condition setting

Prior to setting of conditions for a weathering test, an outdoor UV dose was measured using a UV illuminometer (EYE UV illuminometer UVP365-1 by Iwasaki Electric Co., Ltd.). When measured at noon on fine Vernal Equinox Day (20th March, 2012) at Matsuida, Annaka City, Gunma Pref., Japan, the UV dose was $1\times10^1$ W/m$^2$. This UV dose is

typical in consideration of the prior art report (International Commission on Illumination, 20, 47 (1972), CIE Publication). In the practice described herein, the weather resistance of a cured film is set so as to correspond to outdoor exposure over 2 years. Assume that the annual average daily sunshine time is 12 hours, the accumulative energy quantity is estimated to be 12 (h/day) × 365 (day/year) × 2 (year) × 10 ($W/m^2$) = 88 ($kWh/m^2$) ≅ 300 ($MJ/m^2$).

Weathering test 1

Each of the laminates (L-8 to 17) was evaluated for weather resistance, using EYE Super UV tester W-151 (Iwasaki Electric Co., Ltd.). The test conditions included UV radiation having an intensity of $1\times10^3$ $W/m^2$, an environment at a temperature of 60°C and a humidity of 50% RH, and an accumulative UV energy quantity of 300 $MJ/m^2$. Before and after the test, the sample was evaluated for outer appearance, haze difference ΔHz' (haze measured by haze meter NDH2000), and yellowness index difference ΔYI' (yellowness index measured by yellowness meter Z-300A of Nippon Denshoku Industries Co., Ltd.). With respect to outer appearance, the sample was observed visually or under laser scanning microscope Model VK-8710 by Keyence Corp. Those samples with no cracks detected are rated good (○) whereas those samples with cracks detected are rated poor (×). Those samples giving a haze difference (ΔHz') of up to 5, less than 10, and at least 10 are rated excellent (◎), good (○) and reject (×), respectively. Those samples giving a yellowness difference (ΔYI') of up to 5, up to 10, and more than 10 are rated excellent (◎), good (○) and reject (×), respectively.

Test 6: Weathering resistance

Weathering test 2

The quartz substrate laminates (L-8' to L-17') were measured for UV/visible transmittance spectrum using EYE Super UV tester W-151 (Iwasaki Electric Co., Ltd.). The test conditions included UV radiation having an intensity of $1\times10^3$ $W/m^2$, an environment at a temperature of 60°C and a humidity of 50% RH, and an accumulative UV energy quantity of 300 $MJ/m^2$. The UV/visible transmittance spectrum was measured before and after UV exposure. By way of illustration, transmittance spectral changes of laminate (L-8') of Example 8 and laminate (L-16') of Comparative Example 5 are shown in the diagram of FIG. 6. It is seen that laminate (L-8') of Example 8 experiences a little change in UV-shielding capability whereas laminate (L-16') of Comparative Example 5 experiences a reduction of UV-shielding capability. It is evident that when an organic UV absorber is used, photolysis occurs because of organic matter, and absorption capability is degraded. In contrast, when surface-treated titanium oxide is used, UV absorbing capability is maintained over a long period of time. With a focus on light transmittance at 300 nm, those samples having a post-test transmittance of up to 10% and more than 10% are rated good (○) and poor (×), respectively.

Test 7: UV/visible absorbing capability

The quartz substrate laminates (L-8' to L-17') were measured for UV/visible transmittance spectrum. Those samples having a transmittance of up to 10% at 300 nm and a transmittance of at least 80% at 500 nm are rated good (○) whereas those samples having transmittances outside the range are rated poor (×). The surface of laminates (L-8' to L-17') was scanned by a high-speed Fourier transform thin-film interferometer (F-20 by Filmetrics, Inc.), finding a film thickness of $5\times10^{-6}$ m.

Table 2

| | | Example | | | | | | | Comparative Example | | |
|---|---|---|---|---|---|---|---|---|---|---|---|
| | | 8 | 9 | 10 | 11 | 12 | 13 | 14 | 4 | 5 | 6 |
| Laminate | | L-8<br>L-8' | L-9<br>L-9' | L-10<br>L-10' | L-11<br>L-11' | L-12<br>L-12' | L-13<br>L-13' | L-14<br>L-14' | L-15<br>L-15' | L-16<br>L-16' | L-17<br>L-17' |
| Test 1 | Hz | ◎ | ◎ | ◎ | ◎ | ◎ | ○ | ◎ | × | ◎ | × |
| Test 2 | ΔHz | ○ | ○ | ○ | ○ | ○ | ◎ | ○ | ○ | ○ | ○ |
| Test 3 | | ○ | ○ | ○ | ○ | ○ | ○ | ○ | ○ | ○ | ○ |
| Test 4 | | ○ | ○ | ○ | ○ | ○ | ○ | ○ | ○ | ○ | ○ |

(continued)

| | | Example | | | | | | | Comparative Example | | |
|---|---|---|---|---|---|---|---|---|---|---|---|
| | | 8 | 9 | 10 | 11 | 12 | 13 | 14 | 4 | 5 | 6 |
| Test 5 | Appearance | ○ | ○ | ○ | ○ | ○ | ○ | ○ | × | ○ | × |
| | ΔHz' | ○ | ◎ | ○ | ○ | ○ | ○ | ○ | × | ○ | × |
| | ΔYI' | ○ | ◎ | ○ | ○ | ○ | ○ | ○ | × | ○ | × |
| Test 6 | | ○ | ○ | ○ | ○ | ○ | ○ | ○ | × | × | × |
| Test 7 | | ○ | ○ | ○ | ○ | ○ | ○ | ○ | × | ○ | × |

Example 15

Automotive headlamp part

There was furnished an automotive headlamp cover. The hard coat top layer coated on the cover was removed using a remover (base cleaner Light One by Soft 99 Co., Ltd.) and the resulting bare cover was used as a substrate. The photocurable coating composition (P-1) of Example 1 was spray-coated onto the substrate and cured at 80°C by exposure to UV radiation in a dose of 600 mJ/cm$^2$. There was obtained an automotive headlamp part. The surface of the part was rubbed with steel wool, but no significant flaws were detected. The part was subjected to an accelerated weathering test by EYE Super UV tester W-151 (Iwasaki Electric Co., Ltd.). It was demonstrated that the part maintained its acceptable appearance even after exposure to 300 MJ/m$^2$ of UV radiation.

Discussion of Examples and Comparative Examples

The laminate of Example 8 in which the coating contains surface-treated titanium oxide (T-1) has improved UV-shielding capability. Although the addition of titanium oxide to photocurable coating compositions often causes whitening or hazing because of solubility, this problem is not observed on the laminate of Example 8. Although adhesion is often worsened by the addition of titanium oxide, such detrimental effect is not observed. These advantages are assigned to the specific surface-treating agent in T-1. The laminate of Example 9 has a coating made of a composition containing surface-treated titanium oxide (T-1) and photostabilizer (RUVA-93). The photostabilizer, though optional, is effective for enhancing weathering resistance. The laminate of Example 10 or 11 in which the coating contains titanium oxide (T-2) or (T-3) surface treated with somewhat different component still marks acceptable test results.

By contrast, the laminate of Comparative Example 4 is less transparent and marks unfavorable test results although the coating contains surface-treated titanium oxide (T-4). not surface-treating component (II) is used, it is proven that component (II) is essential. The difference depending on whether or not component (II) is used is also supported by the $^{29}$Si NMR spectra measured in Synthesis Examples 1 to 3 and Comparative Synthesis Example 1, and thus interpreted as being due to a difference in the degree of condensation of T units.

Example 12 demonstrates that the addition of silica sol as optional component is acceptable. Example 13 demonstrates that a siloxane-base component can be used as the photopolymerizable monomer. Example 14 demonstrates that a mono-ester can be additionally used as the photopolymerizable monomer.

Comparative Example 5 exemplifies a laminate having a coating containing an organic photostabilizer rather than the surface-treated titanium oxide. The coating of Comparative Example 5 is approximate to the well-known composition (US-A-5,990,188) and exhibits satisfactory physical properties at the initial. However, its UV-shielding capability is gradually degraded as shown by the results of test 6. Comparative Example 6 in which the coating contains surface-treated titanium oxide (T-4) and a siloxane component as the photopolymerizable monomer shows unsatisfactory physical properties.

It has not heretofore been understood that specific surface-treated titanium oxide sol is effective for overcoming the drawbacks of the prior art. Especially, the method for preparing surface-treated titanium oxide sol and the values of NMR spectrum for judging the applicability of surface-treated titanium oxide sol are not known in the art. The invention provides a solution to the problems which are not acknowledged in the prior art.

INDUSTRIAL APPLICABILITY

The photocurable coating composition of the invention is useful in forming a weather resistant laminate. The weather resistant laminate finds use not only as automotive headlamp covers, but also as protective film on outdoor LC

displays, building material for carports and sunroofs, transportation vehicle parts (e.g. motorcycle windshields and bullet-train windows), automotive glazing, CVD primers, protective film on light-collecting mirrors for solar panels.

The whole contents of Japanese Patent Applications 2013-220815 and 2014-084090, the priorities of which are claimed herein, are incorporated herein by reference.

Although some preferred embodiments have been described, many modifications and variations may be made thereto in light of the above teachings. It is therefore to be understood that the invention may be practiced otherwise than as specifically described without departing from the scope of the general teachings herein and the claims.

## Claims

**1.** A photocurable coating composition comprising

(1) surface-treated titanium oxide comprising 100 parts by weight of core/shell type microparticles each consisting of a core of titanium oxide, which may be complexed with another inorganic oxide, and a shell of silicon oxide around the core, obtainable by treatment of said core/shell microparticles with 11 to 200 parts by weight of both surface treating component having the general formula (I) and surface treating component having the general formula (II):

$$R^1Si(OR^2)_3 \qquad (I)$$

wherein $R^1$ is a $C_1$-$C_{15}$ organic group which may have a (meth)acrylic moiety, and $R^2$ are $C_1$-$C_4$ alkyl,

$$(R^3R^4{}_2Si)_2NH \qquad (II)$$

wherein $R^3$ are $C_1$-$C_{15}$ organic group which may have a (meth)acrylic moiety, and $R^4$ are $C_1$-$C_6$ alkyl,
(2) photopolymerizable monomer and/or oligomer, and
(3) photoinitiator.

**2.** The coating composition of claim 1 wherein the weight ratio of the surface treating component of formula (I) and the surface treating component of formula (II) is 10:190 to 199:1.

**3.** The coating composition of claim 1 or 2 wherein the surface-treated titanium oxide is prepared by or obtainable by a method comprising the steps of: (A) furnishing a water dispersion of the core/shell type microparticles, (B) adding alcohol which forms a two-phase system with the water dispersion, (C) adding silane compound having the general formula (I) and/or (partial) hydrolytic condensate thereof, (D) heating by irradiating microwaves, (E) adding organic solvent, (F) removing water by azeotroping off, (G) optionally, removing further water to 1,000 ppm or less, and (H) reacting with silane compound having the general formula (II).

**4.** The coating composition of any one of claims 1 to 3 wherein the core/shell type microparticles are core/shell type tetragonal titanium oxide solid-solution microparticles each consisting of a core of tetragonal titanium oxide having tin and manganese incorporated in solid solution and said shell of silicon oxide around the core,
the amount of tin incorporated in solid solution providing a molar ratio of titanium to tin (Ti/Sn) of 10/1 to 1,000/1, and the amount of manganese incorporated in solid solution providing a molar ratio of titanium to manganese (Ti/Mn) of 10/1 to 1,000/1.

**5.** The coating composition of any one of claims 1 to 4 wherein the cores of the core/shell type microparticles have a volume average 50% cumulative distribution diameter of up to 30 nm, and the core/shell type microparticles have a volume average 50% cumulative distribution diameter of up to 50 nm, both as measured by the dynamic light scattering method.

**6.** The coating composition of any one of claims 1 to 5 wherein the surface treating component of formula (I) is 3-acryloyloxypropyltrimethoxysilane or 3-methacryloyloxypropyltrimethoxysilane.

**7.** The coating composition of any one of claims 1 to 6 wherein the surface treating component of formula (II) is selected from hexamethyldisilazane, bis[(acryloyloxymethyl)dimethylsilyl]azane, bis[(acryloyloxypropyl)dimethylsilyl]azane, hexaethyldisilazane and hexapropyldisilazane.

**8.** The coating composition of any one of claims 1 to 7 wherein when the coating composition is applied on a quartz substrate to form a coating 5 μm thick, the coating

- has a haze of not more than 2;
- has a light transmittance of at least 80% at a wavelength of 500 nm, and/or
- has a light transmittance of not more than 10% at a wavelength of 300 nm.

**9.** A method of making a coating composition of any one of claims 1 to 8 comprising combining components (1), (2) and (3) thereof, optionally comprising preparation of the surface-treated titanium oxide component (1) comprising said surface treatment.

**10.** A method of making a laminate comprising applying a coating composition of any one of claims 1 to 8 on at least one surface of a substrate and curing to a cured coating.

**11.** A laminate comprising a substrate and a cured coating of a coating composition of any one of claims 1 to 8 on at least one surface of the substrate.

**12.** The laminate of claim 11 wherein the substrate is polycarbonate.

**13.** The laminate of claim 11 or 12 wherein the coating

- has a Taber abrasion index of not more than 10 in the Taber abrasion test according to ASTM D1044;
- has a yellowness index difference of not more than 10 before and after exposure to UV radiation in a dose of 300 $MJ/m^2$, and/or
- has a haze difference of less than 10 before and after exposure to UV radiation in a dose of 300 $MJ/m^2$.

**14.** A sheet for covering an automotive headlamp, comprising a laminate of any one of claims 11 to 13.

## Patentansprüche

**1.** Lichthärtbare Beschichtungszusammensetzung, die Folgendes umfasst:

(1) oberflächenbehandeltes Titanoxid, das 100 Gewichtsteile von Mikropartikeln vom Hülle/Kern-Typ umfasst, die jeweils aus einem Kern aus Titanoxid, das gegebenenfalls mit einem anderen anorganischen Oxid komplexiert ist, und einer Silicium-oxidhülle um den Kern herum bestehen, und das durch die Behandlung der Hülle/Kern-Mikropartikel mit 11 bis 200 Gewichtsteilen sowohl einer Oberflächenbehandlungs-komponente der allgemeinen Formel (I) und einer Oberflächenbehandlungskomponente der allgemeinen Formel (II) erhältlich sind:

$$R^1Si(OR^2)_3 \qquad (I)$$

worin $R^1$ eine organische $C_1$-$C_{15}$-Gruppe ist, die gegebenenfalls eine (Meth)acrylgruppierung aufweist, und die $R^2$ $C_1$-$C_4$-Alkyl sind,

$$(R^3R^4{}_2Si)_2NH \qquad (II)$$

worin die $R^3$ $C_1$-$C_{15}$-Gruppen sind, die gegebenenfalls eine (Meth)acrylgruppierung aufweisen, und die $R^4$ $C_1$-$C_6$-Alkyl sind,
(2) lichtpolymerisierbares Monomer und/oder Oligomer und
(3) Photoinitiator.

**2.** Beschichtungszusammensetzung nach Anspruch 1, worin das Gewichtsverhältnis zwischen der Oberflächenbehandlungskomponente der Formel (I) und der Oberflächenbehandlungskomponente der Formel (II) 10:190 bis 199:1 beträgt.

**3.** Beschichtungszusammensetzung nach Anspruch 1 oder 2, worin das oberflächenbehandelte Titanoxid durch ein Verfahren hergestellt oder erhältlich ist, das folgende Schritte umfasst: (A) das Bereitstellen einer Wasserdispersion

der Hülle/Kern-Mikropartikel, (B) das Zusetzen von Alkohol, der mit der Wasserdispersion ein Zwei-Phasen-System bildet, (C) das Zusetzen einer Silanverbindung der allgemeinen Formel (I) und/oder eines hydrolytischen (partiellen) Kondensats davon, (D) das Erhitzen durch Bestrahlung mit Mikrowellen, (E) das Zusetzen eines organischen Lösungsmittels, (F) das Entfernen von Wasser durch Azeotropdestillation, (G) gegebenenfalls das Entfernen von weiterem Wasser bis zu 1.000 ppm oder weniger und (H) das Umsetzen mit einer Silanverbindung der allgemeinen Formel (II).

**4.** Beschichtungszusammensetzung nach einem der Ansprüche 1 bis 3, worin die Hülle/Kern-Mikropartikel Hülle/Kern-Mikropartikel aus tetragonalem Titanoxid in fester Lösung sind, die jeweils aus einem Kern aus tetragonalem Titanoxid mit in fester Lösung eingebautem Zinn und Mangan und einer Hülle aus Siliciumoxid um den Kern herum bestehen,
wobei die Menge an in fester Lösung eingebautem Zinn ein Molverhältnis von Titan zu Zink (Ti/Sn) von 10:1 bis 1.000:1 bereitstellt und die Menge an in fester Lösung eingebautem Mangan ein Molverhältnis von Titan zu Mangan (Ti/Mn) von 10:1 bis 1000:1 bereitstellt.

**5.** Beschichtungszusammensetzung nach einem der Ansprüche 1 bis 4, worin die Kerne der Hülle-Kern-Mikropartikel einen volumensmittleren Durchmesser bei 50 % der kumulativen Verteilung von bis zu 30 nm aufweisen und die Hülle-Kern-Mikropartikel einen volumensmittleren Durchmesser bei 50 % der kumulativen Verteilung von bis zu 50 nm aufweisen, die beide durch das dynamische Lichtstreuungsverfahren gemessen werden.

**6.** Beschichtungszusammensetzung nach einem der Ansprüche 1 bis 5, worin die Oberflächenbehandlungskomponente der Formel (I) 3-Acryloyloxypropyltrimethoxysilan oder 3-Methacryloyloxypropyltrimethoxysilan ist.

**7.** Beschichtungszusammensetzung nach einem der Ansprüche 1 bis 6, worin die Oberflächenbehandlungskomponente der Formel (II) aus Hexamethyldisilazan, Bis-[(acryloyloxymethyl)dimethylsilyl]azan, Bis[(acryloyloxypropyl)dimethylsilyl]azan, Hexaethyldisilazan und Hexapropyldisilazan ausgewählt ist.

**8.** Beschichtungszusammensetzung nach einem der Ansprüche 1 bis 7, worin, wenn die Beschichtungszusammensetzung als 5 μm dicke Beschichtung auf ein Quarz-Substrat aufgebracht ist, diese Beschichtung

- eine Trübung von nicht mehr als 2 aufweist;
- bei einer Wellenlänge von 500 nm einen Lichtdurchlässigkeitsgrad von zumindest 80 % aufweist und/oder
- bei einer Wellenlänge von 300 nm einen Lichtdurchlässigkeitsgrad von nicht mehr als 10 % aufweist.

**9.** Verfahren zur Herstellung einer Beschichtungszusammensetzung nach einem der Ansprüche 1 bis 8, umfassend das Kombinieren ihrer Komponenten (1), (2) und (3), gegebenenfalls umfassend die Herstellung der oberflächenbehandelten Titanoxidkomponente (1), was die Oberflächenbehandlung umfasst.

**10.** Verfahren zur Herstellung eines Laminats, umfassend das Aufbringen einer Beschichtungszusammensetzung nach einem der Ansprüche 1 bis 8 auf zumindest eine Oberfläche eines Substrats und das Härten zu einer gehärteten Beschichtung.

**11.** Laminat, umfassend ein Substrat und eine gehärtete Beschichtung aus einer Beschichtungszusammensetzung nach einem der Ansprüche 1 bis 8 auf zumindest einer Oberfläche des Substrats.

**12.** Laminat nach Anspruch 11, wobei das Substrat Polycarbonat ist.

**13.** Laminat nach Anspruch 11 oder 12, wobei die Beschichtung

- im Taber-Abrasertest gemäß ASTM D1044 einen Taber-Abrasionsindex von nicht mehr als 10 aufweist;
- vor und nach dem Aussetzen gegenüber UV-Strahlung in einer Dosis von 300 $MJ/m^2$ eine Gelbstichindexdifferenz von nicht mehr als 10 aufweist und/oder
- vor und nach dem Aussetzen gegenüber UV-Strahlung in einer Dosis von 300 $MJ/m^2$ eine Trübungsdifferenz von weniger als 10 aufweist.

**14.** Folie zum Abdecken eines Fahrzeugscheinwerfers, umfassend ein Laminat nach einem der Ansprüche 11 bis 13.

## Revendications

1. Composition de revêtement photodurcissable comprenant

   (1) de l'oxyde de titane traité en surface comprenant 100 parties en poids de microparticules de type noyau/enveloppe, chacune constituée d'un noyau d'oxyde de titane, qui peut être complexé avec un autre oxyde inorganique, et d'une enveloppe d'oxyde de silicium autour du noyau, pouvant être obtenue par traitement desdites microparticules de type noyau/enveloppe avec 11 à 200 parties en poids à la fois d'un composant de traitement de surface ayant la formule générale (I) et d'un composant de traitement de surface ayant la formule générale (II) :

   $$R^1Si\,(OR^2)_3 \qquad (I)$$

   dans laquelle $R^1$ est un groupe organique en $C_1$ à $C_{15}$ qui peut avoir un fragment méthacrylique, et $R^2$ est un groupe alkyle en $C_1$ à $C_4$,

   $$(R^3R^4{}_2Si)_2NH \qquad (II)$$

   dans laquelle $R^3$ est un groupe organique en $C_1$ à $C_{15}$ qui peut avoir un fragment de méthacrylique, et $R^4$ est un groupe alkyle en $C_1$ à $C_6$,
   (2) un monomère et/ou oligomère photopolymérisable, et
   (3) un photoinitiateur.

2. Composition de revêtement selon la revendication 1, dans laquelle le rapport en poids du composant de traitement de surface de formule (I) et du composant de traitement de surface de formule (II) est de 10:190 à 199:1.

3. Composition de revêtement selon la revendication 1 ou 2, dans laquelle l'oxyde de titane traité en surface est préparé ou peut être obtenu par un procédé comprenant les étapes consistant à : (A) fournir une dispersion aqueuse des microparticules de type noyau/enveloppe, (B) ajouter de l'alcool qui forme un système biphasique avec la dispersion aqueuse, (C) ajouter un composé de silane ayant la formule générale (I) et/ou un condensat hydrolytique (partiel) de celui-ci, (D) chauffer par irradiation de micro-ondes, (E) ajouter un solvant organique, (F) enlever l'eau par distillation azéotropique au large, (G) facultativement, éliminer l'eau supplémentaire à 1 000 ppm ou moins, et (H) faire réagir avec un composé de silane ayant la formule générale (II).

4. Composition de revêtement selon l'une quelconque des revendications 1 à 3, dans lequel les microparticules de type noyau/enveloppe sont des microparticules de type noyau/enveloppe en solution solide d'oxyde de titane tétragonal constituées chacune d'un noyau d'oxyde de titane tétragonal ayant de l'étain et du manganèse incorporés en solution solide, et ladite enveloppe d'oxyde de silicium autour du noyau,
   la quantité d'étain incorporée dans la solution solide fournissant un rapport molaire du titane sur l'étain (Ti/Sn) de 10/1 à 1 000/1, et la quantité de manganèse incorporée dans la solution solide fournissant un rapport molaire du titane sur le manganèse (Ti/Mn) de 10/1 à 1 000/1.

5. Composition de revêtement selon l'une quelconque des revendications 1 à 4, dans laquelle les noyaux des microparticules de type noyau/enveloppe ont un diamètre moyen en volume avec distribution cumulative de 50 % allant jusqu'à 30 nm, et les microparticules de type noyau/enveloppe ont un diamètre moyen en volume avec distribution cumulative de 50 % allant jusqu'à 50 nm, tel que mesuré dans les deux cas par le procédé de dispersion de lumière dynamique.

6. Composition de revêtement selon l'une quelconque des revendications 1 à 5, dans laquelle le composant de traitement de surface de formule (I) est choisi parmi le 3-acryloyloxypropyltriméthoxysilane ou le 3-méthacryloxypropyltriméthoxysilane.

7. Composition de revêtement selon l'une quelconque des revendications 1 à 6, dans laquelle le composant de traitement de surface de formule (II) est choisi parmi l'hexaméthyldisilazane, le bis-[(acryloyloxyméthyl) diméthylsilyl]azane, le bis-[(acryloyloxypropyl) diméthylsilyl]azane, l'hexaéthyldisilazane et l'hexapropyldisilazane.

8. Composition de revêtement selon l'une quelconque des revendications 1 à 7, dans laquelle lorsque la composition de revêtement est appliquée sur un substrat de quartz pour former un revêtement de 5 μm d'épaisseur, le revêtement

- a un voile de pas plus de 2 ;
- a une transmission de lumière d'au moins 80 % à une longueur d'onde de 500 nm, et/ ou
- a une transmission de lumière de pas plus de 10 % à une longueur d'onde de 300 nm.

**9.** Procédé de fabrication d'une composition de revêtement selon l'une quelconque des revendications 1 à 8 comprenant une combinaison des composants (1), (2) et (3) de celle-ci, comprenant facultativement une préparation du composant d'oxyde de titane traité en surface (1) comprenant ledit traitement de surface.

**10.** Procédé de fabrication d'un stratifié comprenant une application d'une composition de revêtement selon l'une quelconque des revendications 1 à 8 sur au moins une surface d'un substrat, et un durcissement jusqu'à un revêtement durci.

**11.** Stratifié comprenant un substrat et un revêtement durci d'une composition de revêtement selon l'une quelconque des revendications 1 à 8 sur au moins une surface du substrat.

**12.** Stratifié selon la revendication 11, dans lequel le substrat est du polycarbonate.

**13.** Stratifié selon la revendication 11 ou 12, dans lequel le revêtement

- a un indice d'abrasion Taber de pas plus de 10 dans l'essai d'abrasion Taber selon la norme ASTM D1044 ;
- a une différence d'indice de jaunissement d'au plus 10 avant et après exposition à un rayonnement UV à une dose de 300 MJ / $m^2$, et/ou
- a une différence de voile inférieure à 10 avant et après exposition à un rayonnement UV à une dose de 300 $MJ/m^2$.

**14.** Feuille pour recouvrir un phare automobile, comprenant un stratifié selon l'une quelconque des revendications 11 à 13.

FIG.1

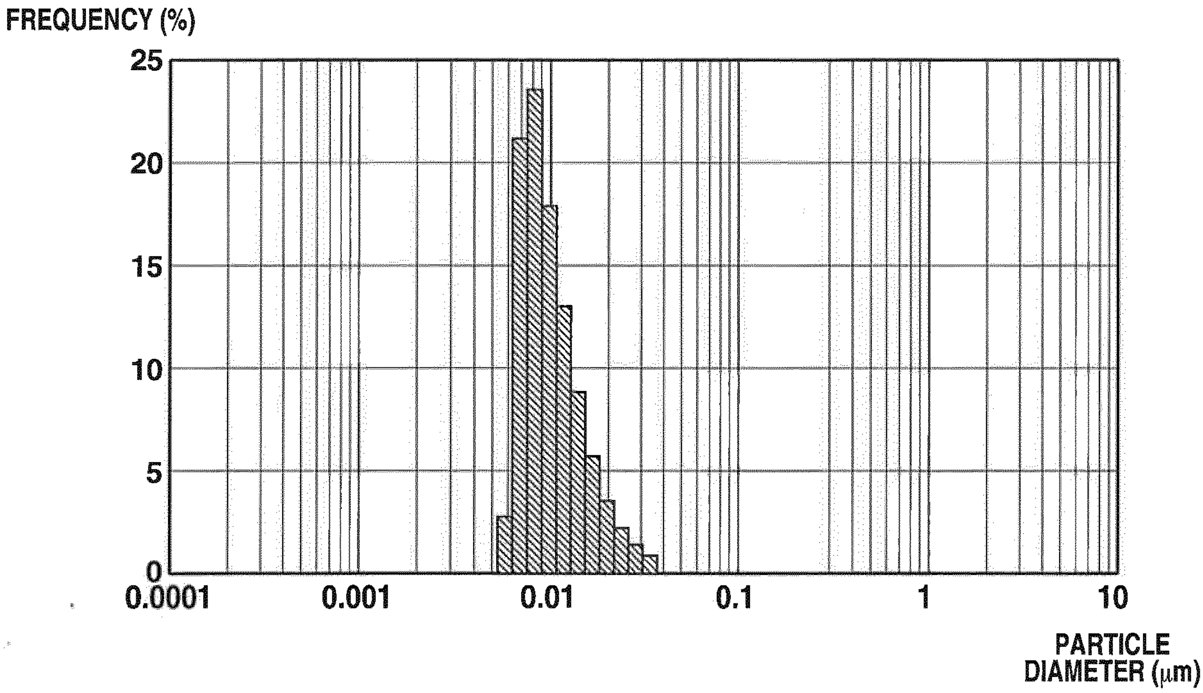
FREQUENCY (%)
25
20
15
10
5
0
0.0001
0.001
0.01
0.1
1
10
PARTICLE DIAMETER (μm)

FIG.2

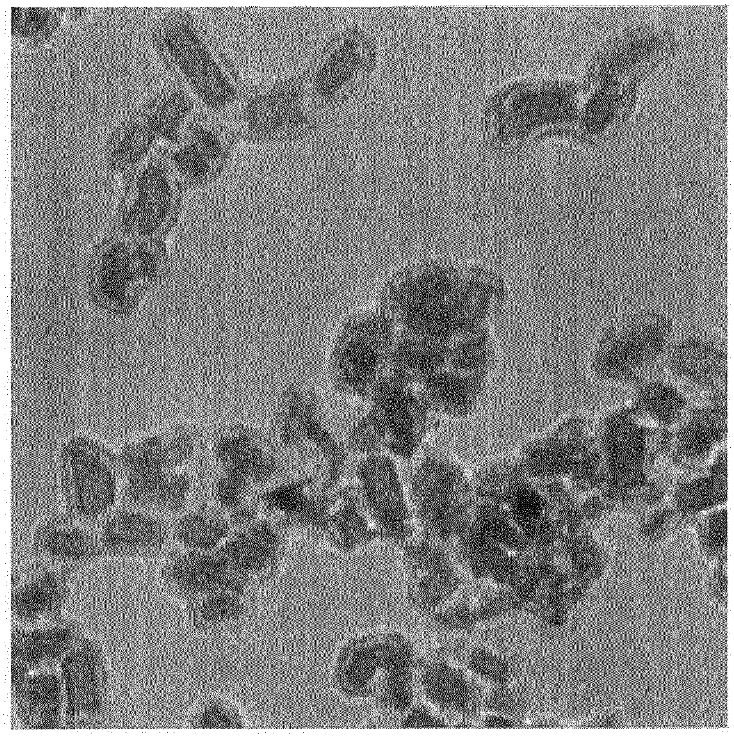

# FIG.3

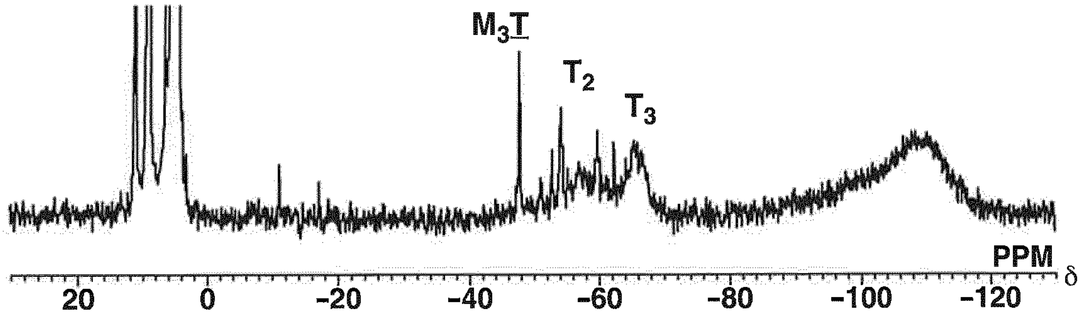


# FIG.4

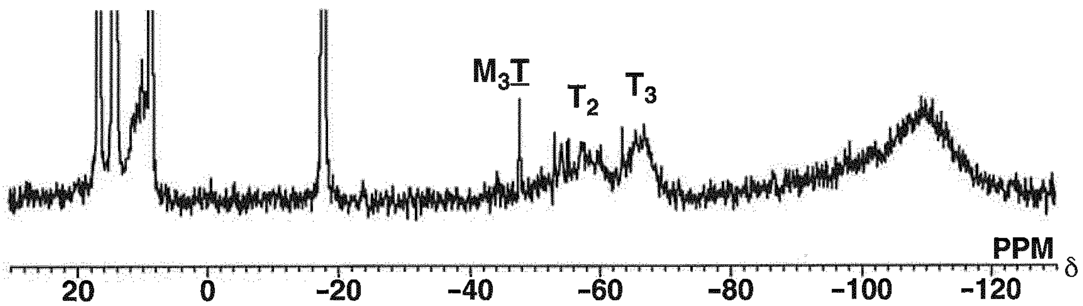


# FIG.5

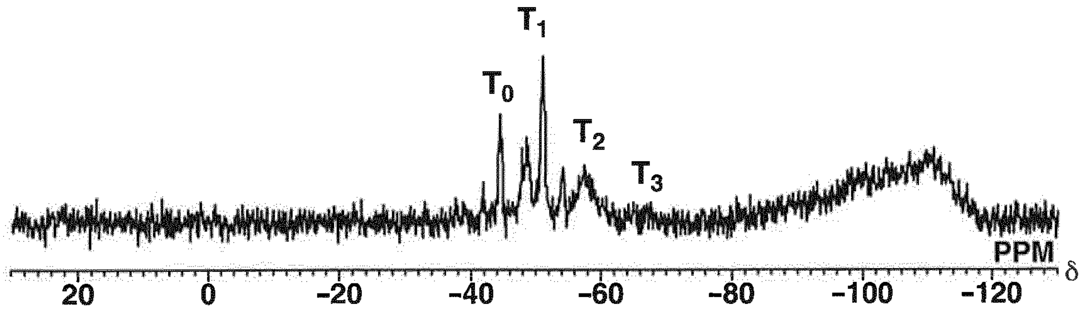

FIG.6

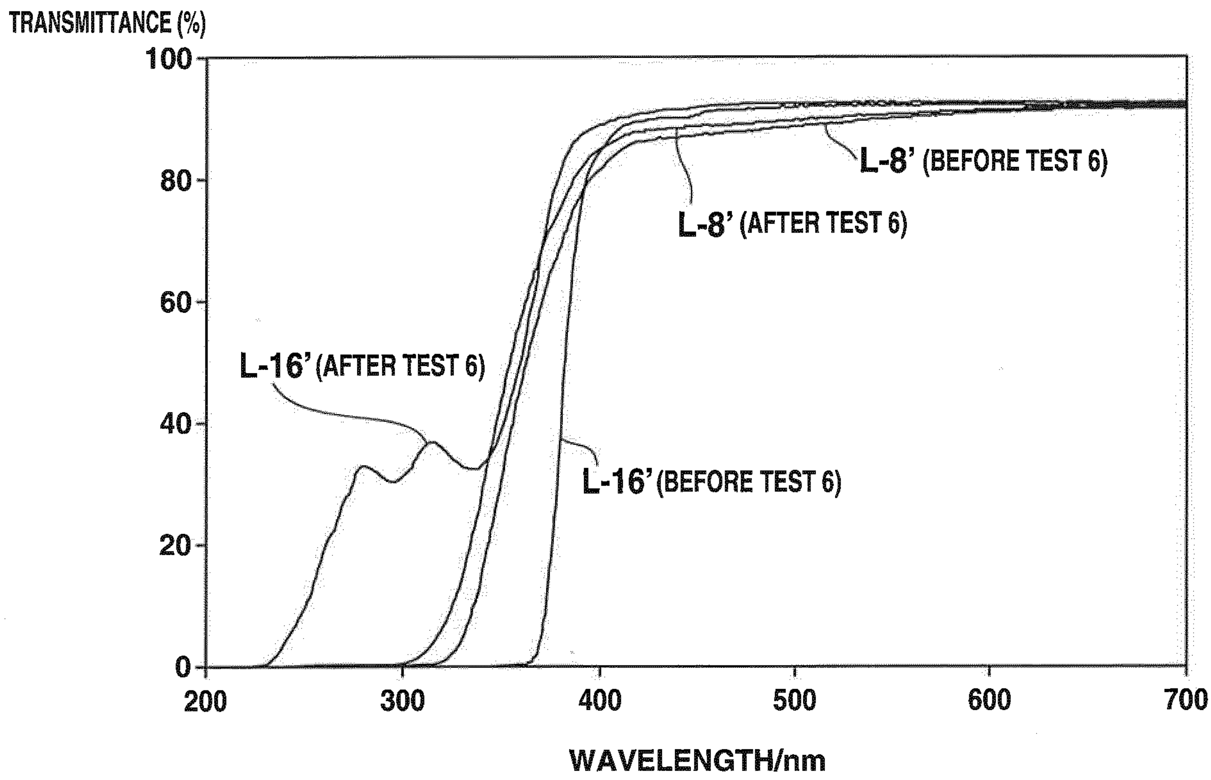
TRANSMITTANCE (%)
100
80
60
40
20
0
200
300
400
500
600
700
WAVELENGTH/nm
L-8' (BEFORE TEST 6)
L-8' (AFTER TEST 6)
L-16' (AFTER TEST 6)
L-16' (BEFORE TEST 6)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5990188 A
- JP 5148846 B
- EP 2428491 A
- JP 2004091323 A
- DE 102009035797
- US 2012125234 A
- JP 2009067778 A
- JP 4868135 B
- JP 2013220815 A
- JP 2014084090 A


### Non-patent literature cited in the description


- *Organometallics,* 2008, vol. 27 (4), 500-502
- *J. Org. Chem.,* 1980, vol. 45, 1164
- *J. Org. Chem.,* 1999, vol. 64 (7707